(19) Europäisches Patentamt
European Patent Office
Office européen des brevets

(11) Publication number: **0 532 893 A2**

(12) **EUROPEAN PATENT APPLICATION**

(21) Application number: **92113440.9**

(22) Date of filing: **06.08.92**

(51) Int. Cl.[5]: **C08G 65/48**, C08L 71/08, C08L 71/12, C08L 81/06, C08L 81/02

(30) Priority: **09.08.91 US 743053**

(43) Date of publication of application: **24.03.93 Bulletin 93/12**

(84) Designated Contracting States: **BE DE FR GB IT SE**

(71) Applicant: **HERCULES INCORPORATED**
**Hercules Plaza**
**Wilmington Delaware 19894-0001(US)**

(72) Inventor: **Biswas, Atanu**
**1 Rexburge Court**
**Newark, Delaware 19711(US)**
Inventor: **Chan, Anita Ngai**
**421 Briar Creek Drive**
**Hockessin, Delaware 19707(US)**
Inventor: **Huarng, Roger Jyh-Chiarng**
**401 Tobin Drive, Apt. No.205**
**Inkster, Michigan 48141(US)**
Inventor: **Jabloner, Harold**
**16 Anne's Way**
**Landenberg Pennsylvania 19350(US)**
Inventor: **Swetlin, Brian Joseph**
**1703 River Road**
**Wilmington, Delaware 19809(US)**
Inventor: **Woodside, Andrew Bencich**
**4 Saint Thomas Court, Village of Lindell**
**Wilmington, Delaware 19808(US)**

(74) Representative: **Lederer, Franz, Dr. et al**
**Lederer, Keller & Riederer, Patentanwälte,**
**Lucile-Grahn-Strasse 22**
**W-8000 München 80 (DE)**

(54) **Depolymerization of polymers and their use in thermoset compositions and composites.**

(57) The present invention is a novel process of preparing a reactive reduced molecular weight polyarylene polyether from a starting polyarylene polyether, wherein said reduced molecular weight polyarylene polyether has a lower molecular weight than said starting polyarylene polyether. The process comprises the steps of first contacting said starting polyarylene polyether with a nucleophilic reagent for a period of time sufficient to reduce the molecular weight of said starting polyarylene polyether, and then recovering said reactive reduced molecular weight polyarylene polyether. The reactive reduced molecular weight polyarylenes produced by such process can be used in combination with various other resins. This process produces many novel reactive polyarylene polyethers represented by the formula

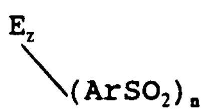

wherein Ar is a bivalent aromatic residue of a polyarylene polyether, Ar may vary within said reactive polyarylene polyether, at least a portion of Ar comprises an aromatic ether or an aromatic thioether group that is ortho or para in position to at least one $SO_2$ group; E represents reactive groups having at least one reactive site, that are located at chain termini, along a chain, or both; z is the number average reactive sites per chain, $0.1 \leqq z \leqq 10.$, and n is the number average repeating units $ArSO_2$.

EP 0 532 893 A2

## Field of the Invention

This invention relates to a novel method of making polyarylene polyethers that are useful ingredients in polymer compositions intended for composites, coatings, adhesives, electronic circuit boards and other applications.

## Background of the Invention

Polyarylene polyethers include well known commercially available thermoplastic resins. The preparation of lower molecular weight polyarylene polyethers through polymerization processes is known. U.S. Patent 4,275,186 (Example 1) shows that hydroxy-terminated polyarylene polyethers having a low degree of polymerization may be made by using a molar excess of the double salt of the dihydroxy phenol.

A particularly often cited polymerization method to obtain reactive polyarylene polyethers comprises condensation of an activated dihalobenzenoid compound, such as 4,4'-dichloro-diphenylsulfone, with a dihydric phenol, such as resorcinol, bisphenol S, bisphenol A, hydroquinone, 4,4'-biphenol or the like, in an aprotic solvent for the reactive polyarylene polyether in the presence of an alkali metal hydroxide, carbonate, bicarbonate or mixtures thereof, followed by reaction of the intermediate with an endcapping reagent such as aminophenol.

Typically, the prior art polymerization is conducted with at least one monomer in excess to produce a low molecular weight intermediate, sometimes referred to as an oligomer. The oligomer, resulting from the polymerization of a dihydric phenol with a molar excess of a dihalobenzenoid, has halogen chain termini, but if the dihydric phenol is in molar excess, then the oligomer resulting from the polymerization terminates in phenolic hydroxy groups. If the chain termini are halogen, the intermediates may be reacted in a second process step referred to as endcapping during which halogen is replaced by more desirable reactive chain termini such as amine by reaction with an endcapping reagent. The endcapping agent may be included with the initial monomer charge as well.

In practice, however, the theoretical relationship between reactant ratio and final degree of polymerization is difficult to obtain using the prior art procedures. The condensation reaction is very sensitive to reactant concentration; and small deviations caused, for example, by ordinary imprecision in weighing as well as by the process of sampling during the long period of reaction required, can upset the delicate balance of reactants and condensation product.

Previous to the present invention, depolymerization methods are not known to have been employed to produce reactive polyarylene polyethers. In several articles, as well as some of the above referenced patents, it has been disclosed that undesired side reactions involving the alkali metal hydroxide used in polymerization methods can cause undesired chain cleavage. For example, an article by Johnson et al. in the Journal of Polymer Science: Part A-1, Volume 5, pages 2375 -2427 (1967) discloses that polyethers and polysulfones may be cleaved by strong bases. The author's reason for wanting to understand possible cleavage side reactions occurring during polymerization was to identify operating boundary conditions within which high molecular weight polymer could be reliably obtained; i.e. side reactions to avoid when trying to synthesize a high molecular weight polymer.

It has been found possible through this invention to provide polyarylene polyethers having a low, but select number of recurring units through a depolymerization process and to produce novel polyarylene polyethers. It has also been found possible to provide a method of recycling scrap polyarylene polyether including any reinforcing materials, fillers or other components of said polyarylene polyethers.

This invention is a novel process of preparing a reactive reduced molecular weight polyarylene polyether, for use in resin compositions, prepregs and composites, from a starting polyarylene polyether, wherein said reduced molecular weight polyarylene polyether has a lower molecular weight than said starting polyarylene polyether. The process comprises the steps of first contacting said starting polyarylene polyether with a nucleophilic reagent for a period of time sufficient to reduce the molecular weight of said starting polyarylene polyether, and then recovering said reactive reduced molecular weight polyarylene polyether. The reactive reduced molecular weight polyarylenes produced by such process are normally intended for use in combination with various other resins including epoxy, bismaleimide, cyanate ester, phenol-formaldehyde, urethane, polyester, vinyl ester, siloxane, cyclopentadiene and higher oligomers, acetylenic, and cyclic polycarbonate resins, or mixtures thereof.

This process produces many novel reactive polyarylene polyethers represented by the formula

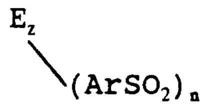

wherein Ar is a bivalent aromatic residue of a polyarylene polyether, Ar may vary within said reactive polyarylene polyether, at least a portion of Ar comprises an aromatic ether or an aromatic thioether group that is ortho or para in position to at least one $SO_2$ group; E represents reactive groups having at least one reactive site, that are located at chain termini, along a chain, or both; z is the number average reactive sites per chain, $0.1 \leqq Z \leqq 10.$, $z = 2R/T$, $.05 \leqq R/T \leqq 5$, R/T is the ratio of all reactive sites to all chain termini that are prepared by depolymerizing poly(aryl ether sulfones) with nucleophilic reagents and n is the number average repeating units $ArSO_2$.

The polymers that are depolymerized or degraded with nucleophilic reagents include poly(aryl ether sulfones), poly(aryl ether ketones), poly(aryl ether nitriles), poly(ether imides), poly(phenylene ethers), poly-(phenylenesulfides) and other aromatic ether and thioether linked polymers. The term polyarylene polyether as used herein is meant to include linear and branched homopolymers, copolymers, terpolymers, graft copolymers, block copolymers and the like.

Polyarylene polyethers having one or more of the following recurring units are included within the scope of this invention. The chemical structures that correspond to the following nomenclature follows.

1. oxy-1,4-phenyleneisopropylidene-1,4-phenyleneoxy-1,4-phenylenesulfonyl-1,4-phenylene.
2. oxy-1,4-phenyleneoxy-1,4-phenylenesulfonyl-1,4-phenylene.
3. oxy-1,3-phenyleneoxy-1,4-phenylenesulfonyl-1,4-phenylene.
4. oxy-1,4-phenyleneoxy-1,4-phenyleneoxy-1,4-phenylenesulfonyl-1,4-phenylene.
5. oxy-1,4-phenylenesulfonyl-1,4-phenylene.
6. oxy-1,4-phenyleneisopropylidene-1,4-phenyleneoxy-1,4-phenylenesulfonyl-4,4'-biphenylenesulfonyl-1,4-phenylene.
7. thio-1,4-phenylenesulfonyl-1,4-phenylene.
8. oxy-4,4'-biphenyleneoxy-1,4-phenyleneoxy-1,4-phenylene.
9. oxy-1,4-phenylenecarbonyl-1,4-phenylene.
10. oxy-1,4-phenylenecarbonyl-1,4-phenyleneoxy-1,4-phenylene.
11. oxy-1,4-phenylenecarbonyl-2,7-naphthyleneoxy-1,4-phenylene.
12. oxy-2,7-naphthyleneoxy-1,4-phenylenesulfonyl-1,4-phenylene.
13. thio-1,4-phenylene.
14. oxy-2,6-dimethyl-1,4-phenylene.
15. oxy-1,3-phenyleneoxy-1-(2-cyano)-3-phenylene.
16. N,5-phthalimideoxy-1,4-phenyleneisopropylidene-5,N-phthalimideoxy-1,3-phenylene.

1. 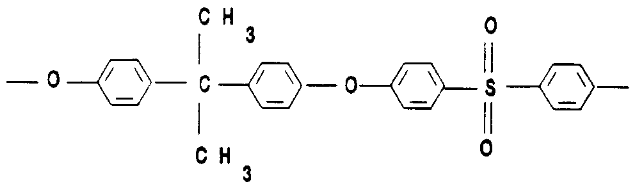

2. 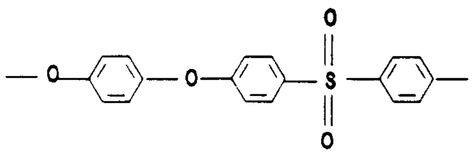

3. 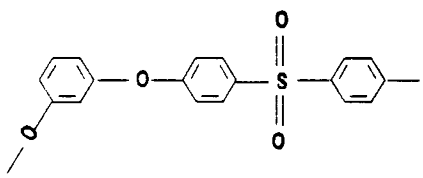

4. 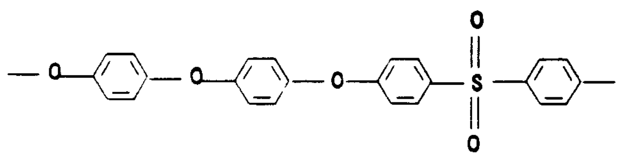

5. 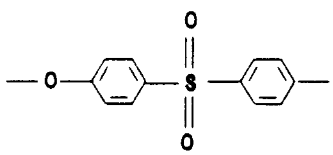

6. 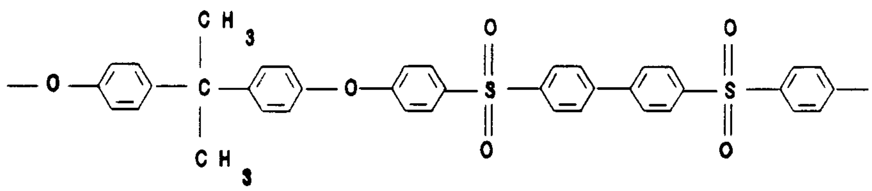

7. 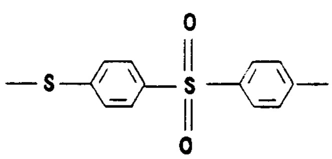

8. 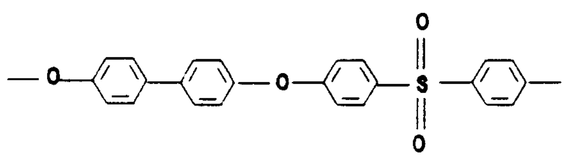

9.

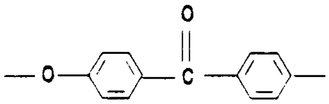

10.

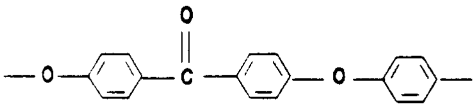

11.

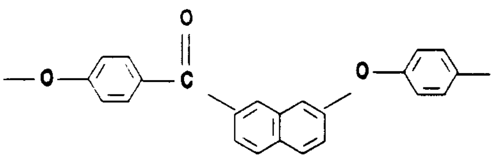

12.

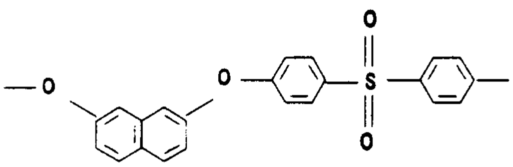

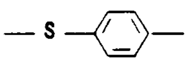

13.

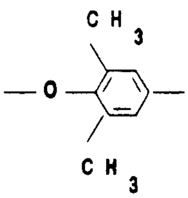

14.

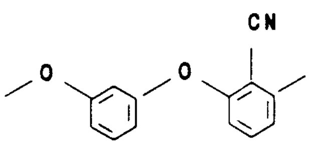

15.

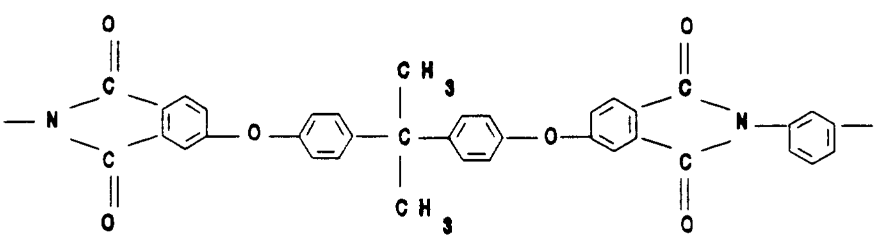

16.

Mixtures of two or more polyarylene polyethers are also included within the scope of this invention. The polyarylene polyethers used as starting materials in this invention may contain various pigments and fillers such as glass, mineral, rubber, metal, carbon, or ceramic particulate of any shape and dimension and therefore this invention can be utilized as a method of recycling polyarylene polyethers. The physical form of the particular poly(aryl ether sulfones) is not important, but most preferred are poly(aryl ether sulfones) sold as thermoplastic injection molding or extrusion pellets. Waste or scrap poly(aryl ether sulfones) from plastics conversion operations and molded or shaped articles comprised substantially of poly(aryl ether sulfones) may be used. Fiber reinforced poly(aryl ether sulfone) prepreg and composite may be used also.

The poly(aryl ether sulfones) used as starting materials have, m number average, recurring units of the formula

$(ArSO_2)_m$

where m is always greater than n, Ar is a bivalent aromatic residue that may vary from unit to unit in the chain and at least some of the Ar units have an aromatic ether or thioether group in the chain ortho or para to at least one $SO_2$ group. It is to be understood that whenever the formula $ArSO_2$ is present in any formula there is necessarily a sequence of Ar preceded by $SO_2$ or followed by $SO_2$, but that such units may be found in the polymer in varying order. The value of m will depend on the molecular weight of the recurring unit and the number average molecular weight of the poly(arylether sulfone) used. The value of m can be any positive rational number greater than about 1.0, but preferably m is greater than about 10.0 and less than 150.

Typical of the commercially available poly(aryl ether sulfones) are those sold under the Victrex trademark by Imperial Chemical Industries, those sold under the Udel and Radel trademarks by Amoco and those sold under the Ultrason trademark by BASF.

As examples of suitable poly(aryl ether sulfones) may be mentioned linear and branched homopolymers, copolymers, terpolymers, graft copolymers, block copolymers and the like, most preferably comprised substantially of one or more of the following recurring units,

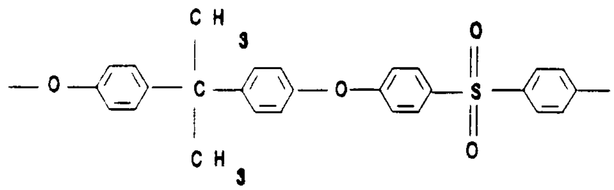

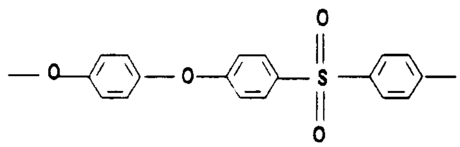

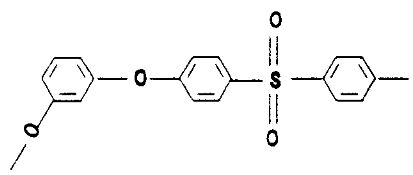

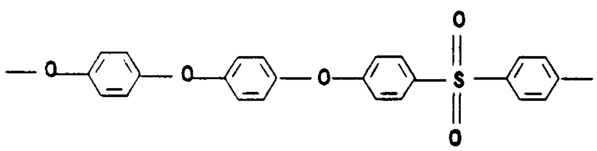

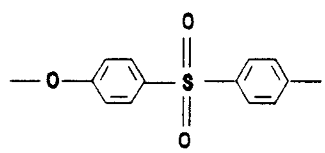

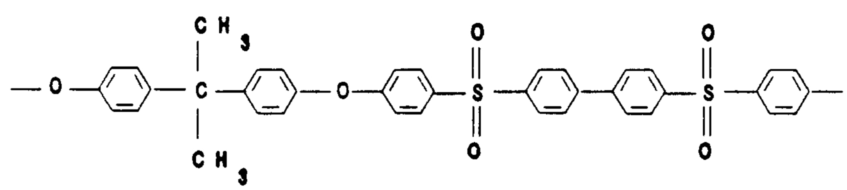

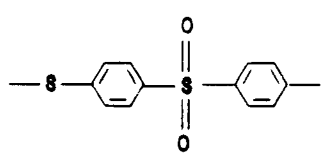

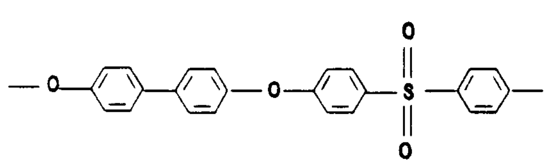

The poly(aryl ether sulfones) used in this invention are most preferably of relatively high molecular weight as determined by Size Exclusion Chromatographic techniques. Preferred poly(aryl ether sulfones) have a weight average molecular weight greater than about 10,000 daltons. More preferred are poly(aryl ether sulfones) having a weight average molecular weight greater than about 20,000 daltons. Most preferred are poly(aryl ether sulfones) having a weight average molecular weight greater than about 30,000 daltons. However, the process of this invention can be conducted with starting materials that have a molecular weight as low as 300 daltons.

Suitable nucleophiles can have any of a number of physical forms at room temperature and ambient pressure. The nucleophiles can be gases, liquids or solids at room temperature and ambient pressure; if solid, they can exist in various solid forms such as pellets, granules or powders or as dispersions of solids in liquids, or as adsorbed or chemically bonded on solid supports.

Preferred nucleophiles for use in this invention include bisphenates, bisthiophenols, bisalkoxides, and ammonium sulfide. More preferred nucleophiles for use in this invention include aromatic amines, aminophenols, aminothiophenols, and alkanolamines. The most preferred nucleophiles for use in this invention are alkali metal hydroxides, alkali metal sulfides, alkali metal hydrogensulfides, ammonia, alkylamines, hydrazines, and thiol or amino substituted triazoles. Mixtures of these nucleophiles can also be used.

Examples of specific nucleophiles for use in this invention include potassium hydroxide, sodium sulfide, ammonia, sodium hydrogensulfide, methylamine, dimethylamine, piperazine, 1,6-hexanediamine, diethylenetriamine, 4-amino-5-hydrazino-4H-1,2,4-triazole-3-thiol, hydrazine, aniline, 4,4'-methylene dianiline, 4,4'-oxydianiline, 3-aminophenol, 4-aminophenol, 4-aminothiophenol, 2-aminoethanol, 2,2-bis(4-hydroxyphenyl)-propane disodium salt, 1,4-cyclohexanediol disodium salt, ammonium sulfide, and like materials.

The amount or concentration of nucleophile to be used when practicing the present invention depends on the desired molecular weight for the reactive polyarylene polyether to be produced and upon the depolymerization process and the reaction conditions. In general, the higher the nucleophile concentration, the lower the molecular weight of the reactive polyarylene polyether produced. When the process is performed in solution, the nucleophile concentration may be as high as 30% by weight of the starting polymer. The preferred concentration of the nucleophile is less than 10% by weight of the starting polymer. The most preferred concentration of the nucleophile is between 2% and 10% by weight of the starting polymer.

In the case of depolymerizations conducted at higher pressures, the nucleophile concentration may range from 2.5% up to 75% by weight of the starting polymer. The preferred nucleophile concentration should be limited to 50% and the most preferred concentration range is from 2.5% to 30% by weight of the starting polymer.

The reaction time is dependent upon the reduction in molecular weight desired from the starting polymer, the particular starting polymer and nucleophile employed, the temperature of the reaction and the respective concentrations of materials. In the concentrations used in the examples herein, when potassium hydroxide was the nucleophile in a low pressure solution process, it was found that an equilibrium molecular weight of the reactive polyarylene polyether was reached in about 3-5 hours. In the case of the same combination of nucleophile and polymer employing a melt process in place of the solvent process, less than 10 minutes was required to obtain a corresponding reduction in molecular weight. One skilled in the art could determine the appropriate reaction conditions through experimentation.

The methods of this invention need not be practiced in the presence of a solvent for the starting polymer. For example, the depolymerization can be conducted substantially in the melt or in a medium comprised substantially of a non-solvent for the starting polymer. Among the solvents that can be used in the practice of this invention include aprotic polar solvents, like dimethylsulfoxide (DMSO), N-methyl-2-pyrrolidinone (NMP) and N,N'-dimethylacetamide (DMAC), but other types of solvents can also be used as a depolymerization medium. Even non-solvents for the starting polymers can be advantageously used as the depolymerization medium. An example of such a suitable non-solvent for polyarylene polyethers is water. Mixtures of solvents and non-solvents for the starting polymers can be used as the depolymerization medium, such as a mixture of N,N'-dimethylacetamide (DMAC) and water. The solvent or non-solvent need not be a liquid, but may be a solid or gas at ambient temperature and pressure. As examples of the former may be mentioned tetrahydrothiophene-1,1-dioxide and diphenyl sulfone and examples of the latter include ammonia and carbon dioxide.

Thus, this invention is particularly unique in that, in contrast to prior art polymerization methods for poly(aryl ether sulfones) and the other starting polymers contemplated for use in the practice of this invention, there are no particularly stringent reasons for excluding non-solvents or for that matter even having solvents present to effect the desired reaction.

The solvent or non-solvent, in addition to being a medium in which the depolymerization is effected, may also be the nucleophile used to effect the depolymerization, for example, ammonia. The solvent or non-solvent may also react with a nucleophile to generate a different nucleophile in-situ, said different nucleophile reacting with the starting polymer to effect the depolymerization, for example, N,N-dimethylacetamide solvent reacting with potassium hydroxide to produce dimethylamine in-situ. The type of nucleophile employed depends on the type of reactive groups desired in the final product.

The reactive groups produced when practicing this invention are substantially comprised of a residuum of the nucleophile used to effect the depolymerization, the residuum of a nucleophile produced during the depolymerization, the residuum of a cleaved recurring unit, the resulting reactive group from the reaction with a reactant such as an endcapping reagent, or a combination of any of the aforementioned reactive groups. It has been found that there are usually present reactive groups which are the residuum of the nucleophile used to effect the depolymerization together with reactive groups which are the residuum of a cleaved recurring unit formed during the depolymerization. For example, the use of ammonia as the nucleophile leaves $-NH_2$ reactive groups, which are the residuum of the nucleophile used to effect the depolymerization together with -OH reactive groups, which are the residuum of a cleaved recurring unit formed during the depolymerization. The term reactive group as used herein is meant to include those groups having reactive sites that can be reacted with other molecules or resins, containing epoxide, anhydride, cyanate ester, thiocyanate ester, maleimide, carboxyl, amine, acyl halide, isocyanate, hydroxyl, or halide groups via condensation, nucleophilic addition, alkylation reactions or other reactions known to those skilled in the art.

Among the preferred reactive groups are those containing primary amine, secondary amine, tertiary amine, hydroxyl, and thiol, connected directly or through a series of covalent bonds to a residuum of an $ArSO_2$ recurring unit.

The reactive groups E may be the same or different within a chain and may be chain termini or distributed randomly along a chain, or both on a particular product made in accordance with the present invention. Not all chain termini are required to be reactive groups for the products made by this invention to be useful in some of the intended applications. For example, the reactive groups E can be occasionally replaced by inert or unreactive groups such as hydrocarbyl or phenyl chain termini, said inert or unreactive chain termini may be present in the starting polymer. The ratio of all reactive sites to all chain termini, herein designated as R/T, is preferably greater than 0.05. A preferred range for R/T is between 0.2 and 2.0. However, for applications requiring greater reactivity R/T may be as high as 5.0.

R/T is determined by the equation $R/T = (C \times Mn)/2000$; where C is the concentration of reactive sites in milliequivalents per gram as determined by chemical titration or other suitable methods and Mn is the number average molecular weight preferably determined by an absolute method such as vapor pressure osmometry (VPO). When Mn is determined by Size Exclusion Chromatography, it is understood that R/T will no longer be an absolute number but rather R/T will be a relative number which is altered simply by choice of solvent, calibration standards used, flow rates, temperature and other experimental variables.

In another of its aspects, the invention is directed to methods of preparing reactive poly(aryl ether sulfones) of the type,

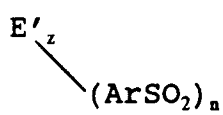

comprising the multi-step method of first depolymerizing poly(aryl ether sulfones) with a nucleophile to produce intermediates of the type,

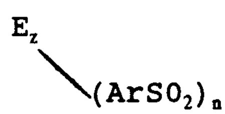

where E preferably contains hydroxyl or amine reactive sites, then adding to the reaction mixture an endcapping reagent, and finally reacting the endcapping reagent with the reactive group E intermediates above to produce a poly(aryl ether sulfone) with reactive groups E'; wherein E' is selected from the group consisting of E, the reaction product of E with an endcapping reagent and combinations thereof. The reactive groups E' are connected directly, or through a series of covalent bonds, to a residuum of an $ArSO_2$ recurring unit.

Where desired, suitable endcapping reagents can be used, including any of the endcapping reagents for producing reactive poly(aryl ether sulfone) known to those skilled in the art, particularly those endcapping reagents that leave reactive groups selected from the group consisting of epoxide, primary

amine, secondary amine, tertiary amine, anhydride, carboxyl, hydroxyl, maleimido, cyanate ester, ethynyl, vinyl, allyl, methallyl, methylnadimido, nadimido, thiol, thiocyanate ester and isocyanate.

Preferred endcapping reagents include epichlorohydrin, allyl bromide, chloromethyl styrene, chlorodiamino-s-triazine, propargyl bromide, glycidyl methacrylate, cyanogen halides, cyanuric chloride followed by reaction with 1,6-hexanediamine, acetic anhydride, methyl-5-norbornene-2,3-dicarboxylic acid anhydride, 5-norbornene-2,3-dicarboxylic anhydride, and 4,4'-methylene diphenylisocyanate. The term "endcapping reagent" is not meant to be limited to the providing of reactive groups to the ends of the polymers produced in accordance with this invention, but includes reactive groups appearing anywhere along the length of the polymer chain.

In still another variation of the invention, a polyfunctional nucleophile is employed to produce a reactive polyarylene polyether incorporating along the chain one or more residuum of said nucleophiles represented by the formula

$$E_z \diagdown (ArSO_2)_a-(X)_b$$

where Ar is a bivalent aromatic residue that may vary within said reactive polyarylene polyether, a portion of Ar comprises an aromatic ether or an aromatic thioether group that is ortho or para in position to at least one $SO_2$ group, X is a residue of a polyfunctional nucleophile, E represents reactive groups having at least one reactive site, z is the number average reactive sites per chain, $0.1 \leqq z \leqq 10$, a is the number average recurring units $ArSO_2$, b is the number average recurring units X, the sum of a + b is less than m, and the ratio of b units to a + b units is greater than about 0.001 and less than about 0.10. The polyfunctional nucleophile (the residuum of which is X) is selected from the group consisting of alkali metal sulfides, alkali metal hydrogensulfides, hydrates of said alkali metal sulfides and said alkali metal hydrogensulfides, thiol or amino substituted triazoles, alkylamines, bisaminoalkanes, polyaminoalkanes, bismercaptoalkanes, bisphenates, bisphenols, bisthiophenols, bisalkoxides, ammonium sulfide, aminophenols and aminothiophenols. Preferred polyfunctional nucleophile reagents, the residue of which is X above, include sodium sulfide, sodium hydrogensulfide, piperazine, 1,6-hexanediamine, diethylenetriamine, 4-amino-5-hydrazino-4H-1,2,4-triazole-3-thiol, 4,4'-methylene dianiline, 4,4'-oxydianiline, 3-aminophenol, 4-aminophenol, 4-aminothiophenol, 2-aminoethanol, 2,2-bis(4-hydroxyphenyl)propane disodium salt, 1,4-cyclohexanediol disodium salt and ammonium sulfide. It has been found that polyfunctional nucleophiles are incorporated as new recurring units, which are covalently bonded to phenyl groups para to $SO_2$ groups, which are part of two different $ArSO_2$ recurring units. Depending on the polyfunctional nucleophile used, the new recurring units may have none, one or more than one reactive sites. For example, sodium sulfide may be incorporated as new recurring unit -S- having no residual reactive sites, while diethylenetriamine may be incorporated as new recurring unit $-NH(CH_2)_2NH(CH_2)_2NH-$ having three residual reactive sites. The polyfunctional nucleophile is not solely incorporated as new recurring units X, but also reacts as a monofunctional nucleophile to generate a reactive group E, which is the residuum of said nucleophile used to effect the depolymerization. Additional reactive groups E are generated as a result of the depolymerization, which are the residuum of cleaved recurring units. For example, when diethylenetriamine was used as the polyfunctional nucleophile in one of the examples to follow, reactive groups E, having primary amine, secondary amine and hydroxyl reactive sites were generated, in addition to incorporation of the nucleophile as a new recurring unit.

The reactive polyarylene polyethers of this embodiment of the invention can be further reacted with suitable endcapping reagents as described above. The reactive groups E is one or more groups selected from the group consisting of

$-OH$

$-N(CH_3)_2$

$-N(R_1)R_2$

$-NH(CH_2)_6NH_2$

$-NHR_1NH_2$

$-NH(CH_2)_2NH(CH_2)_2NH_2$

$-NHR_1NHR_2NH_2$

$-SH$

$-CH_2CH=CH_2$

$-CH=CH_2$

$-CH_2C\equiv CH$

$-COOH$

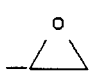

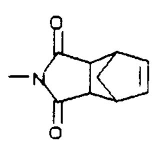

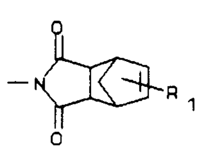

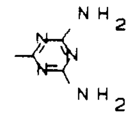

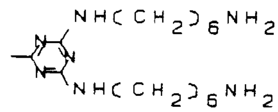

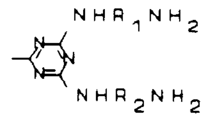

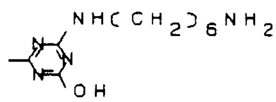

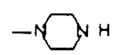

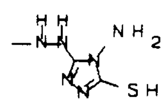

$-SCN$

$-OCN$

$-NCO$

$-NHR_1$

$-NH_2$

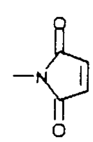

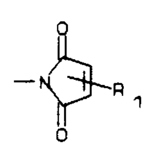

wherein $R_1$ and $R_2$ are selected from the group consisting of bivalent aromatic groups and linear or branched alkyl groups having 1 to 20 carbon atoms and $R_1$ and $R_2$ are the same or different.

It is contemplated that many novel polyarylene polyethers can be synthesized in accordance with the procedure of the present invention including those represented by the formula $E_z\text{-}(ArSO_2)_n$ wherein Ar is a bivalent aromatic residue that may vary within said reactive polyarylene polyether and wherein at least a

portion of Ar comprises an aromatic ether or an aromatic thioether group that is ortho or para in position to at least one $SO_2$ group; n is the number average recurring units; E represents reactive groups, having at least one reactive site, that is located at chain termini, along a chain, or both; z is the number average reactive sites per chain and $0.1 \leqq z \leqq 10$ and E is selected from the group consisting of -OH and at least one of the following:

$-OH$

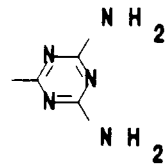

$-N(CH_3)_2$

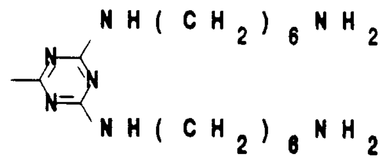

$-N(R_1)R_2$

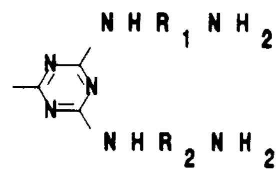

$-NH(CH_2)_6NH_2$

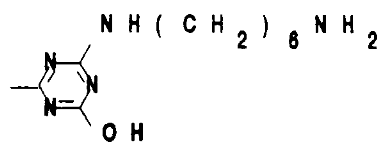

$-NHR_1NH_2$

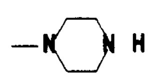

$-NH(CH_2)_2NH(CH_2)_2NH_2$

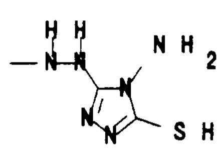

$-NHR_1NHR_2NH_2$

$-SH$

wherein $R_1$ and $R_2$ are selected from the group consisting of bivalent aromatic groups and linear or branched alkyl groups having 1 to 20 carbon atoms and $R_1$ and $R_2$ are the same or different.

Other variations, of which there are many, will be readily contemplated by those skilled in the art. These reactive polyarylene polyethers can be employed in such diverse applications as composites, adhesives, electronics, coatings, fibers, films, moldings, and extrusions.

The reactive polyarylene polyethers of this invention will most often be employed in composite resin formulations in combination with high strength filaments or fibers such as carbon (graphite), glass, silicon carbide and other ceramic fibers, alumina, titania, boron, aromatic polyamide or other organic reinforcing fibers, in the preparation of composites. In particular, use is contemplated in composite resin compositions containing epoxy, bismaleimide, cyanate ester, phenolformaldehyde, urethane, polyester, vinyl ester,

cyclopentadiene, acetylenic, siloxane, and cyclic polycarbonate resins, or mixtures thereof.

Composite resin formulations may include a catalyst such as chloroplatinic acid or another organometallic reagent or a curing agent such as a peroxide or an amine hardener, more preferably an aromatic diamine having a molecular weight below 750 as taught in U.S. Patent 4,656,207; 4,656,208 and U.S. Application Serial No. 07/614,652, filed 11/16/90 which are herein incorporated by reference. The curing agent may also be anhydrides and dianhydrides such as taught in the aforementioned references. Composite resin formulations may also include fugitive solvents, colorants, plasticizers, flame retardants, antioxidants, ultraviolet stabilizers and various mineral fillers such as calcium carbonate, mica or clay.

The composite resin compositions hereof may further contain infusible particles which can be elastomeric, thermoplastic, thermosetting, semi-interpenetrating networks (IPN) from a thermoplastic and a thermoset or comprised of inorganic or metallic materials. The infusible particles have a median particle size (i.e. half are bigger and half are smaller) ranging between 5 and 75 microns. The infusible particles may take a variety of shapes including cylindrical, spherical, elongated, platelet or irregular. The particles are infusible insofar as they resist deformation and dissolution during manufacture of the matrix resin composition and prepregs thereof. The particles need not be infusible during cure or use of the resin composition or prepreg or laminate formed therefrom. Suitable elastomeric particles include a variety of commercially available rubbers such as copolymers of butadiene or isoprene with acrylonitrile or vinyl aromatic monomers such as styrene or vinyl toluene, or terpolymers of a diene, a vinyl aromatic monomer and acrylonitrile. Other suitable rubbers include natural rubber, silicone rubber, diene or olefin rubbers and acrylic rubbers. The rubber polymer preferably contains functionality which improves the adhesion between the particle and the matrix resin. For example, the rubber may contain carboxyl groups which either react so as to chemically bond with the matrix or simply improve compatibility of the particles with the resin due to their polar nature. Adhesion to the matrix can also be effected by swelling of the particles with the resin composition. The elastomeric particles are dispersed in the resin composition during or after its formation, or they are formed and dispersed in the resin composition during resin manufacture, or they may be sprinkled on the surface of a film of the resin or on the surface of a prepreg comprising the resin and high strength filaments or fibers. The infusible particle can also comprise glass, ceramic or other inorganic particles. The glass or the like, or ceramic particles are dispersed in the resin composition during or after its formation or they may be sprinkled on the surface of a film of the resin or on a prepreg comprising the resin and high strength filaments or fibers and may be surface treated to enhance adhesion in the crosslinked resin matrix.

Composites generally comprise about 20 to about 80 percent by weight of high strength filaments or fibers, and preferably about 40 to 70 percent by weight.

The high strength filaments or fibers, will ordinarily be combined with the composite resin formulations that contain the reactive polyarylene polyethers of this invention, to provide preimpregnated reinforcement or prepreg. Prepreg may be prepared by any of the several techniques well known and commonly used in the art. For example, the composite resin formulation may be first coated as a thin film on release paper. Aligned tows of fiber are then pressed between two sheets of the coated paper and passed through a series of heated rollers to effect wet-out of the fiber tows by the resin. The resulting prepreg is then allowed to cool and is taken up on a spool. Tacky, drapable prepreg can be obtained with the compositions of this invention.

Composites can be prepared from prepreg by curing with heat, microwave or other forms of thermal energy. Composites can also be prepared from the reactive polyarylene polyethers of this invention via wet lay-up followed by compression molding, by resin transfer molding, by injection molding or by a filament winding operation, wherein preimpregnated tow is wound over a rotating and removable form or mandrel and cured in an oven or autoclave.

The reactive polyarylene polyethers of this invention can also be employed as adhesives, or when cured as laminates they can be employed as circuit boards and the like for the electronics industry.

Methods For Characterization of Starting Polymers and Product Examples

Size Exclusion Chromatography (SEC) was used to determine number average molecular weight (Mn) and weight average molecular weight (Mw) of the starting polyarylene polyethers and the depolymerized products. Filtered solutions (2.5 mg/mL) in tetrahydrofuran (21 °C), 1,1,2,2-tetrachloroethane (70 °C) or in N-methyl-2-pyrrolidinone (21 °C) were characterized according to well known procedures employing polystyrene calibration standards. The solvent employed depended on the starting polymer and the same solvent was used for the products derived from said starting polymer.

$^{13}C$ and $^{1}H$ NMR were used to confirm structures and reactive group concentrations were determined by chemical titration when feasible. The following chemical titration procedures were employed on the starting polyarylene polyethers and the depolymerized products.

Aromatic hydroxyl and thiol concentration was determined by first dissolving 0.1 to 1.0 grams of sample in 50 ml of pyridine. The sample solution was potentiometrically titrated with 0.1 N tetrabutyl ammonium hydroxide, prepared in 6/3/1 (V/V/V), toluene/isopropanol/methanol, using a Beckman combination electrode. The indicator end point was determined with orthonitroaniline. A solvent blank was titrated for correction. Dimethylsulfoxide can be substituted as the solvent. Heating may be required to dissolve some samples.

Amine concentration was determined by first dissolving 0.1 to 1.0 gram of sample in 75 ml of methylene chloride. A 25 ml volume of glacial acetic acid was added to the solution. The solution was then potentiometrically titrated with 0.05 N perchloric acid, prepared in glacial acetic acid, using a Beckman combination electrode. A solvent blank was titrated for correction. Cresol or tetrahydrofuran can be substituted as solvent. Heating may be necessary to dissolve samples.

The titration procedure described above provides total base concentration. Basic impurities were separately determined as aqueous extractable base, which was subtracted from the total base, to determine amine concentration, which includes primary, secondary and tertiary amine groups.

The aqueous extractable base concentration was determined by first dissolving two grams of sample in 150 ml of methylene chloride. This solution was transferred to a separatory funnel. A 100 ml volume of distilled water was added, followed by thorough shaking and then the two phases were allowed to separate on standing. The aqueous phase was collected quantitatively and this solution was potentiometrically titrated with 0.1 N aqueous HCl using a Beckman combination electrode. A solvent blank was extracted and titrated as described above for correction.

Epoxide concentration was determined by first dissolving 0.5 grams of sample in 50 ml of methylene chloride. Then, 25 ml of tetraethylammonium bromide in glacial acetic acid (10% weight to volume) was added and the mixture was allowed to react for five minutes. This solution was potentiometrically titrated with 0.05N perchloric acid, prepared in glacial acetic acid, using a Beckman combination electrode. A solvent blank was titrated as above for correction. Separately, total base was determined as described previously and subtracted from the concentration determined by the above procedure to obtain epoxide concentration. This method is adapted from R. R. Jay, Anal. Chem.,36,667 (1964).

## EXAMPLES

The following examples illustrate the invention but are not intended to be limiting. These examples illustrate the depolymerization of polyarylene polyethers to form lower molecular weight reactive polyarylene polyethers. In some examples, the reactive and lower molecular weight products are reacted with an endcapping reagent in a second step to produce different reactive polyarylene polyethers. The examples further illustrate the use of said reactive polyarylene polyethers in damage tolerant composites. In the examples, all parts are parts by weight, all pressures are gauge pressures, all concentrations are in meq./gram, all temperatures are in degrees Celsius and all molecular weights are in grams/mole unless noted otherwise. Also, compression after impact strength (CAI), was determined in accordance with the procedures of US Patents 4,656,207; 4,656,208 and 4,783,506, herein incorporated by reference.

Examples 1-31 illustrate depolymerization of the following poly(aryl ether sulfones).

Starting Polymer A was Udel P1700 purchased from Amoco, Inc. in the form of injection molding pellets. By NMR it was found to be a homopolymer comprised substantially of the recurring unit

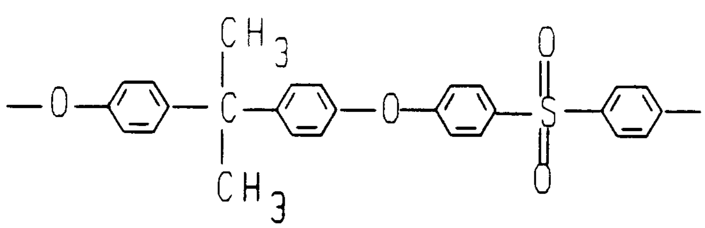

By Size Exclusion Chromatography with THF solvent, it was determined to have Mn = 14,200 and Mw = 57,100. By chemical titration it was determined to have 0.015 milliequivalents per gram of phenolic hydroxyl.

Starting Polymer B was Radel A 100 purchased from Amoco, Inc. in the form of injection molding pellets. By NMR it was found to be a copolymer comprised substantially of the recurring units

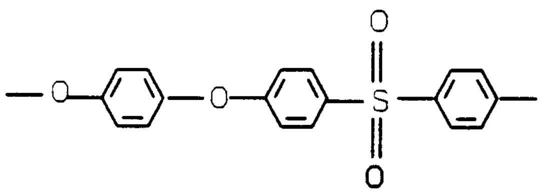

and

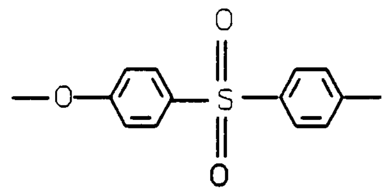

By Size Exclusion Chromatography with 1,1,2,2-tetrachloroethane solvent, it was determined to have Mn = 15,900 and Mw = 56,500. By chemical titration it was determined to have 0.007 milliequivalents per gram of phenolic hydroxyl.

Starting Polymer C was Victrex 4100G purchased from ICI, Ltd. in the form of injection molding pellets. By NMR it was found to be a homopolymer comprised substantially of the recurring unit

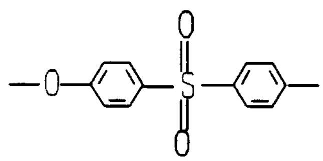

By Size Exclusion Chromatography in 1,1,2,2-tetrachloroethane solvent, it was determined to have Mn = 15,300 and Mw = 35,100. By chemical titration it was determined to have 0.013 milliequivalents per gram of phenolic hydroxyl.

Starting Polymer D was Ultrason E2010 purchased from BASF in the form of injection molding pellets. By NMR it was found to be a terpolymer comprised substantially of the recurring units

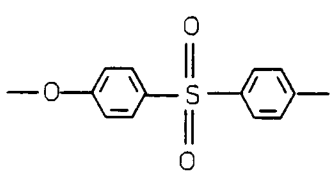

and

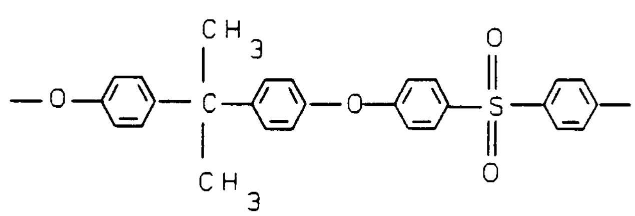

and a minor quantity of a third recurring unit which was not identified. By Size Exclusion Chromatography with 1,1,2,2-tetrachloroethane solvent, it was determined to have Mn = 17,000 and Mw = 44,900. By chemical titration it was determined to have 0.008 milliequivalents per gram phenolic hydroxyl.

Starting Polymer E was Radel A 200 purchased form Amoco, Inc. in the form of injection molding pellets. By NMR it was found to be a copolymer comprised substantially of the recurring units

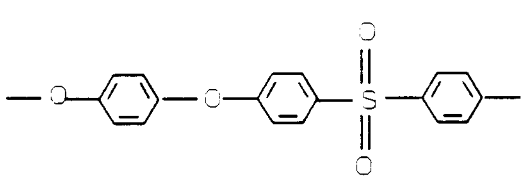

and

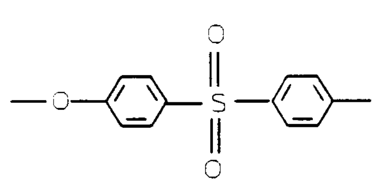

By Size Exclusion Chromatography in 1,1,2,2-tetrachloroethane solvent, it was determined to have Mn = 16,300 and Mw = 54,100. By chemical titration it was determined to have 0.007 milliequivalents per gram of phenolic hydroxyl.

Starting Polymer F was prepared according to the procedure described below. By NMR it was shown to be a homopolymer comprised of the recurring unit

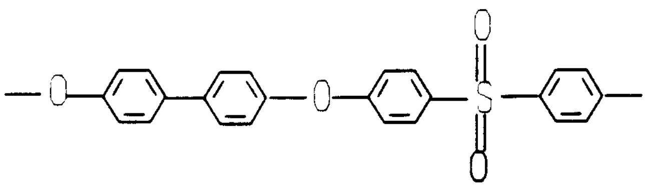

By Size Exclusion Chromatography in NMP solvent it was determined to have Mn = 17,200 and Mw = 40,300. By chemical titration it was determined to have 0.170 milliequivalents per gram of phenolic hydroxyl. The following procedure used to prepare Starting Polymer F: In a 1-liter, 3-neck flask, equipped with a mechanical stirrer, a Dean-Stark trap and condenser, and a nitrogen inlet/outlet was charged a mixture of 4,4'-dichloro-diphenyl-sulfone (30.84 g, 0.107 mol), 4,4'-biphenol (20.0 g, 0.107 mol), potassium carbonate (44.53 g), N-methyl-2-pyrrolidinone (400 ml) and toluene (100 ml). The mixture was sparged with nitrogen, heated to 160 ° C and held at that temperature for three days. The mixture was then cooled to room temperature, coagulated in methanol, filtered, washed thoroughly with water, washed thoroughly with methanol, air dried and then dried under partial vacuum at 60 ° C for 16 hours.

In Examples 1-4, a depolymerization method for preparing novel poly(aryl ether sulfones) having phenolic hydroxyl and tertiary amine reactive groups is illustrated using four different starting polymers. The nucleophiles are KOH and dimethylamine; the dimethylamine was created in-situ via hydrolysis of the solvent, N,N'-dimethylacetamide.

Example 1

A twelve liter glass flask equipped with agitation, nitrogen purge, condenser and heating means was charged with 6,600 grams of N,N'-dimethylacetamide and 2,200 grams of Starting Polymer A at room temperature. The temperature was increased to 135 ° C and then 165 grams KOH pellets was added to the homogeneous solution. The temperature was maintained at 135 ° C for six hours. Then the reaction product was coagulated in acidified water by a continuous process using a three to one volume ratio of acidified water to reactor contents. The filtered powdery coagulum was thoroughly washed with water and then dried at 120 ° C under partial vacuum until constant weight was achieved. The dried product had substantially the same recurring unit as Starting Polymer A, but was of substantially lower molecular weight. Chemical titration showed the reactive groups to be phenolic hydroxyl and amine. The amine was tertiary amine by NMR. Size Exclusion Chromatography and chemical titration results are shown in Table 1.

Example 2

A twelve liter glass flask equipped with agitation, nitrogen purge, condenser and heating means was charged with 6,580 grams of N,N'-dimethylacetamide and 2,000 grams of Starting Polymer B at room temperature. The temperature was increased to 135 ° C, with 75 grams of KOH pellets then added to the homogeneous solution. The temperature was maintained between 135 and 145 ° C for four hours. The reaction product was coagulated in acidified water (pH 3-4), using a water to reactor contents volume ratio of about two to one. The coagulum was filtered and thoroughly dried at 120 ° C under partial vacuum until constant weight was achieved. The dried product was substantially comprised of the same recurring units as Starting Polymer B, but was of substantially lower molecular weight. Chemical titration showed the reactive groups to be phenolic hydroxyl and amine. The amine was tertiary amine by NMR. Size Exclusion Chromatography and chemical titration results are shown in Table 1.

Example 3

A twelve liter glass flask equipped with agitation, nitrogen purge, condenser and heating means was charged with 6,714 grams of N,N'-dimethylacetamide and 2,250 grams of Starting Polymer C at room temperature. The temperature was increased to 133 ° C at which point, 135 grams of KOH pellets were added to the homogeneous solution. The temperature was maintained between 133 and 137 ° C for four hours and twenty minutes. Then the reaction product was coagulated in acidified water (pH 3-4) using a three to one volume ratio of water to reactor contents. The filtered powdery coagulum was thoroughly washed with water and then dried at 120 ° C under partial vacuum until constant weight was achieved. The dried product had substantially the same recurring units as Starting Polymer C, but was of substantially

lower molecular weight. Chemical titration showed the reactive groups to be phenolic hydroxyl and amine. Size Exclusion Chromatography and chemical titration results are shown in Table 1.

Example 4

A twelve liter glass reactor equipped with agitation, nitrogen purge, condenser and heating means was charged with 2,857 grams of N,N'-dimethylacetamide and 900 grams of Starting Polymer D at room temperature. The temperature was increased to 135°C and 18 grams of KOH pellets were added to the homogeneous solution. The temperature was maintained at 135°C for four hours and then 23.1 grams of acetic acid was added to the solution after cooling to 58°C. The reaction product was coagulated in water by a continuous process using about a 3:1 volume ratio of water to reactor contents. The filtered coagulum was thoroughly washed with water and dried at about 120°C under partial vacuum until constant weight was achieved. The dried product had substantially the same recurring units as Starting Polymer D, but was of substantially lower molecular weight. Chemical titration showed the reactive groups to be phenolic hydroxyl and amine. Size Exclusion Chromatography and chemical titration results are shown in Table 1.

Table 1

| Examples 1-4: Depolymerization method for preparing poly(aryl ether sulfones) having phenolic hydroxyl and tertiary amine reactive groups. | | | | | | |
|---|---|---|---|---|---|---|
| EXAMPLE | STARTING POLYMER | Mn | Mw | TITRATION RESULTS(meq/g) | | |
| | | | | OH | AMINE | R/T |
| 1 | A | 3070 | 6290 | 0.64 | 0.06 | 1.08 |
| 2 | B | 2750 | 8960 | 0.33 | 0.15 | 0.66 |
| 3 | C | 1590 | 5780 | 0.57 | 0.02 | 0.47 |
| 4 | D | 5960 | 15300 | 0.21 | 0.02 | 0.69 |

Example 5

In Example 5 it is shown that molecular weight is conveniently controlled by controlling the reaction time. Into a one liter glass reactor equipped with stirring, nitrogen purge, condenser and heating means was charged 400.0 grams of N,N'-dimethylacetamide and 100.0 grams of Starting Polymer A. The contents were heated to 165°C and then 5.0 grams powdered KOH was added to the homogeneous mixture. The temperature was maintained at 165°C. After 10 minutes, a 20 ml aliquot was removed and coagulated in 100 ml water. The coagulum was filtered and washed five times with 100 ml portions of water and then dried at 110°C for 16 hours under partial vacuum. In like manner, a 20 ml aliquot was removed every 10 minutes for an additional 50 minutes and purified as discussed above. The dried products were characterized by Size Exclusion Chromatography and results are shown in Table 2.

Table 2

| Reaction Time (min.) | Mn | Mw |
|---|---|---|
| 10 | 10,300 | 40,900 |
| 15 | 8,940 | 35,200 |
| 20 | 7,700 | 28,900 |
| 25 | 6,560 | 21,400 |
| 30 | 5,530 | 18,100 |
| 35 | 4,960 | 16,500 |
| 40 | 4,500 | 14,800 |
| 45 | 4,300 | 13,100 |
| 50 | 4,130 | 12,100 |
| 55 | 3,840 | 11,400 |
| 60 | 3,810 | 11,400 |

Example 6

In Example 6 it is shown that melt depolymerization of poly(aryl ether sulfones) is a surprisingly fast process. Forty-five grams of Starting Polymer A was charged to a Brabender batch mixer with nitrogen purge which was set to 320 °C and 50 rpm. After the polymer melted, in about two minutes, the speed was increased to 100 rpm. Potassium hydroxide powder was added (in quantities shown in Table 3) either slowly within one minute (addition method "all") or slowly one-half of the KOH powder was added within one minute and the other half added two minutes later. The total reaction time was six minutes following the initial charge of KOH. The reaction product was removed from the mixer and cooled in air. The solid product was ground to a powder and then washed in about 1 liter of distilled water. The product was filtered and then dried at 80 °C under partial vacuum for 16 hours. The dried product was characterized by Size Exclusion Chromatography as shown in Table 3.

Table 3

| AMOUNT KOH ADDED (GRAMS) | KOH ADDITION METHOD | Mn | Mw |
|---|---|---|---|
| 0.5625 | all | 6,450 | 31,600 |
| 1.1250 | all | 2,450 | 10,900 |
| 1.1250 | half/half | 4,060 | 10,300 |
| 2.250 | all | 4,770 | 11,130 |

Example 7

Example 7 illustrates a depolymerization and endcapping method for preparing novel poly(aryl ether sulfones) having reactive groups substantially comprised of primary amine attached directly to a triazine nucleus. A five liter glass reactor equipped with agitation, nitrogen purge, condenser and heating means was charged with 3,333 grams of N,N'-dimethylacetamide and 1000 grams of Starting Polymer A at room temperature. The temperature was increased to 135 °C at which point 50 grams of KOH powder were added to the homogeneous solution. The temperature was maintained between 130 and 135 °C for four hours. Then the temperature was decreased to 110 °C at which point 137.5 grams 2-chloro-4,6-diamino-1,3,5-triazine were added to the homogeneous solution. The temperature was maintained at 110 °C for six hours. Then the reaction product was coagulated in water using a seven to one volume ratio of water to reactor contents. The filtered product was thoroughly washed with water and then dried to constant weight at 120 °C under partial vacuum. The dried product had substantially the same recurring unit as Starting Polymer A, but was of substantially lower molecular weight. Chemical titration showed the reactive groups to be comprised primarily of amine and some phenolic hydroxyl. Size Exclusion Chromatography results were Mn = 4030 and Mw = 9650. Chemical titration results were amine = 0.42 meq/gram and OH = 0.11 meq/gram. R/T was 1.07. The amine was mostly primary aromatic amine attached directly to a triazine

nucleus and of the types

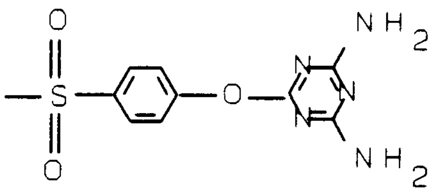

and

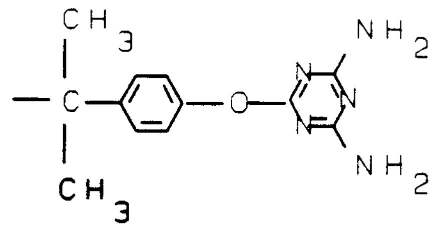

Examples 8-12 illustrate methods for preparing novel poly(aryl ether sulfones) having reactive groups substantially comprising secondary and primary amine as well as hydroxyl.

Example 8

A twelve liter glass reactor equipped with agitation, nitrogen purge, condenser and heating means was charged with 7,500 grams of N,N'-dimethylacetamide and 2,000 grams of Starting Polymer C at room temperature. The temperature was increased to 135°C at which point 67.5 grams KOH pellets were added to the homogeneous solution. The temperature was maintained at 135°C for four hours. The temperature was then decreased to 4°C at which point 186 grams of 2,4,6-trichloro-1,3,5-triazine were slowly charged to the reactor within thirty minutes. The temperature was maintained at 4°C for one hour and then the temperature was increased to 60°C and held at 60°C for two hours. The temperature was then decreased to 4°C at which point, 471 grams of 1,6-hexanediamine were charged to the reactor slowly within a two hour period. The temperature was then maintained for thirty minutes, increased to 20°C and held for one hour and then increased to 60°C and held for thirty minutes. The reaction product was coagulated in water by a continuous process using a three to one volume ratio of water to reactor contents. The filtered powdery coagulum was thoroughly washed with water and dried at 120°C under partial vacuum until constant weight was achieved. The dried product had substantially the same recurring unit as Starting Polymer C, but was of substantially lower molecular weight. Chemical titration showed the reactive groups to be composed of amine and hydroxyl. The amine was mostly of the type

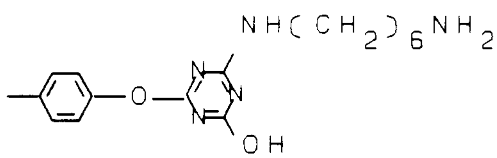

and

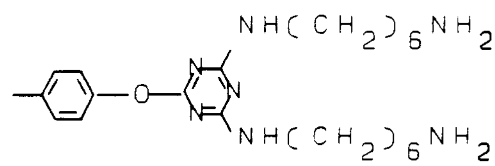

Size Exclusion Chromatography and chemical titration results are shown in Table 4.

Example 9

The same procedure as used in Example 8 was used in Example 9, except Starting Polymer E was substituted for Starting Polymer C, and 60 grams KOH was used instead of 67.5 grams KOH. The dried product had substantially the same recurring units as Starting Polymer E, but was of substantially lower molecular weight. The reactive groups were as described in Example 8. Size Exclusion Chromatography and chemical titration results are shown in Table 4.

Example 10

A twelve liter glass reactor equipped with agitation, nitrogen purge, condenser and heating means was charged with 6,750 grams of N,N'-dimethylacetamide and 2,250 grams of Starting Polymer B at room temperature. The temperature was increased to 134°C at which point 157.5 grams of diethylenetriamine was charged to the reactor. The temperature was maintained between 134 and 144°C for three hours and forty-five minutes. The reaction product was coagulated in water by a continuous process using a water to reactor contents volume ratio of about three to one. The filtered powdery coagulum was thoroughly washed

with water and then dried at 120°C under partial vacuum until constant weight was achieved. The dried product had substantially the same recurring units as Starting Polymer B, but was of substantially lower molecular weight. The amine was of the type

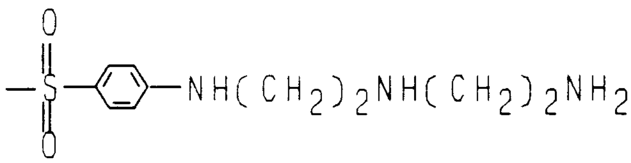

as shown by NMR. Size Exclusion Chromatography and chemical titration results are shown in Table 4.

Example 11

The same procedure used in Example 10 was used in Example 11 except Starting Polymer C was substituted for Starting Polymer B, 123.5 grams of diethylenetriamine was used instead of 157.5 grams, the diethylenetriamine was added at 80°C instead of 134°C and the temperature was held at 140-143°C for four hours. The dried product had substantially the same recurring unit as Starting Polymer C, but in addition to being of substantially lower molecular weight, new recurring units of the type

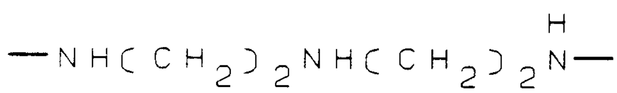

were found by NMR. Chemical titration showed the reactive groups to be amine and hydroxyl. The amine was of the type described in Example 10 and of the type described above wherein the reactive amine was randomly distributed along the polymer chain. Size Exclusion Chromatography and chemical titration results are shown in Table 4.

Example 12

A 500 ml glass reactor equipped with agitation, nitrogen purge, condenser and heating means was charged with 198 ml of dimethylsulfoxide and 62.5 grams of Starting Polymer C. The temperature was increased to 140°C at which point 3.44 grams of 1,6-hexanediamine was charged to the reactor. The temperature was maintained at 140°C for four hours. Then the reaction product was coagulated in water and the filtered powdery coagulum washed thoroughly with water. The product was dried at 120°C under partial vacuum until constant weight was achieved. The dried product had substantially the same recurring units as Starting Polymer C, but was of substantially lower molecular weight. Chemical titration showed the reactive groups to be amine and hydroxyl. The amine was of the type

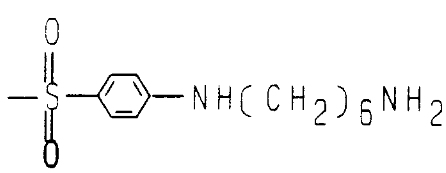

Size Exclusion Chromatography and chemical titration results are shown in Table 4, which shows the results of depolymerization and endcapping methods for preparing novel poly(aryl ether sulfones) having mostly secondary amine, primary amine and hydroxyl reactive groups from Examples 8-12.

Table 4

| EXAMPLE | STARTING POLYMER | Mn | Mw | TITRATION RESULTS(meq/g) | | |
|---|---|---|---|---|---|---|
| | | | | OH | AMINE | R/T |
| 8 | C | 2810 | 10100 | 0.42 | 0.25 | 0.94 |
| 9 | E | 2810 | 10700 | 0.28 | 0.23 | 0.72 |
| 10 | B | 3180 | 10500 | 0.24 | 0.17 | 0.65 |
| 11 | C | 2340 | 9180 | 0.32 | 0.22 | 0.63 |
| 12 | C | 1640 | 6660 | 0.24 | 0.32 | 0.46 |

## Example 13

Example 13 illustrates a depolymerization and endcapping method for preparing poly(aryl ether sulfones) having reactive groups substantially comprised of epoxide. A five liter glass reactor equipped with agitation, nitrogen purge, condenser, and heating means was charged with 3,300 grams of N,N'-dimethylacetamide and 1,000 grams of Starting Polymer A at room temperature. The temperature was increased to 135°C at which point 50 grams of KOH powder was added to the homogeneous solution. The temperature was maintained for four hours and then it was decreased to 60°C at which point 250 grams of 1-chloro-2,3-epoxypropane was slowly charged to the reactor. The temperature was increased to 80°C and held for six hours. The reaction product was then coagulated in water using about a three to one volume ratio of water to reactor contents. The filtered powdery coagulum was thoroughly washed with water and then dried at 120°C under partial vacuum until constant weight was achieved. The dried product had substantially the same recurring unit as Starting Polymer A, but was of substantially lower molecular weight. Size Exclusion Chromatography results were Mn = 4,530 and Mw = 10,900. Chemical titration results were epoxide = 0.30 meq/gram, R/T was 0.91.

## Example 14

Example 14 illustrates a depolymerization method for preparing novel poly(aryl ether sulfones) having reactive groups comprised of primary amine, secondary amine, thiol and hydroxyl. A 500 ml glass reactor equipped with agitation, nitrogen purge, condenser and heating means was charged with 198 ml of dimethylsulfoxide and 62.5 grams of Starting Polymer C at room temperature. The temperature was increased to 140°C at which point 3.44 grams of 4-amino-5-hydrazino-4H-1,2,4-triazole-3-thiol was charged to the homogeneous solution. The temperature was maintained at 140°C for 19 hours. The reaction product was coagulated in water and the filtered coagulum was then thoroughly washed with water. The powdery coagulum was then dried at 120°C under partial vacuum until constant weight was achieved. The dried product had substantially the same recurring units as Starting Polymer C, but was of substantially lower molecular weight. Size Exclusion Chromatography results were Mn = 2,190 and Mw = 9,920. Chemical titration results were amine = 0.13 meq/g; thiol = 0.14 meq/g; OH = 0.23 meq/g. R/T was 0.55. The amine and thiol reactive groups were of the type

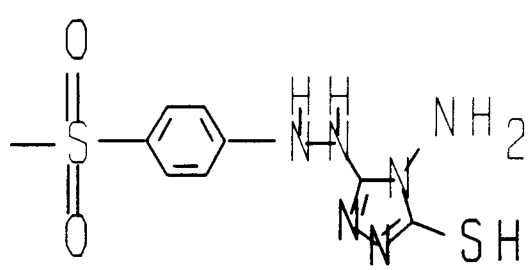

Examples 15-18 illustrate depolymerization and endcapping methods for preparing poly(aryl ether sulfones) having various unsaturated reactive groups.

Example 15

A one liter glass reactor equipped with agitation, nitrogen purge, condenser and heating means was charged with 400 grams of N,N'-dimethylacetamide and 100 grams of Starting Polymer A at room temperature. The temperature was increased to 160 °C at which point 4.2 grams KOH powder was charged to the homogeneous solution. The temperature was maintained at 160 °C for three hours. A 20 ml aliquot was removed and coagulated in 100 ml water, filtered and washed five times with 100 ml portions of water. The depolymerized intermediate was dried at 110 °C under partial vacuum for 16 hours. The remainder of the solution was cooled to 45 °C at which point 10.0 grams allyl bromide was charged to the reactor. The temperature was increased to 75 °C and maintained for four hours. The final reaction product was coagulated in 2 liters of water in a high speed blender. The coagulum was filtered and washed five times with one liter portions of water and then dried at 110 °C under partial vacuum for 16 hours. Results are shown in Table 5.

Example 16

The same materials, procedure and apparatus were used as in the previous example. The remainder of the solution, following removal of a 20 ml aliquot, was cooled to room temperature and 15.0 grams of propargyl bromide was charged to the reactor. The mixture was warmed to 100 °C and held at that temperature for five hours. The final reaction product was recovered and dried as in the previous example. Results are shown in Table 5.

Example 17

The same materials, procedure and apparatus were used as in the previous example. The remainder of the solution, following removal of a 20 ml aliquot, was cooled to 10 °C and 17.0 grams of glycidyl methacrylate was charged to the reactor. The mixture was warmed to room temperature and held at that temperature for six hours. The final reaction product was recovered and dried as in the previous example. Results are shown in Table 5.

Example 18

The same materials, procedure and apparatus was used as in the previous example. The remainder of the solution, following removal of a 20 ml aliquot, was cooled to 0-5 °C and 15.0 grams chloromethyl styrene was added. The mixture was warmed to and then held at room temperature for four hours. The final reaction product was recovered and dried as in the previous example. Results are shown in Table 5 which shows depolymerization and endcapping methods of Examples 15-18 for preparing poly(aryl ether sulfones) having various unsaturated reactive groups.

Table 5

| EXAMPLE | ENDCAPPING REAGENT | TITRATION RESULTS OH(MEQ/G) | | UNSATURATED REACTIVE GROUP |
|---|---|---|---|---|
| | | BEFORE ENDCAP | AFTER ENDCAP | |
| 15 | allyl bromide | 0.24 | 0.04 | allyl |
| 16 | propargyl bromide | 0.24 | 0.12 | ethynyl |
| 17 | glycidyl methacrylate | 0.26 | 0.12 | vinyl |
| 18 | chloromethyl styrene | 0.28 | 0.18 | vinyl |

Examples 19 and 20 illustrate depolymerization with nucleophiles that are gaseous at ambient temperature and pressure.

Example 19

Example 19 shows that poly(aryl ether sulfones) can be depolymerized with ammonia in a high pressure vessel. The products have primary aromatic amine groups of the type

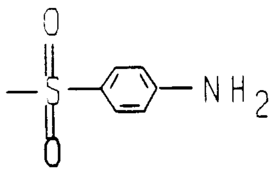

The reactor was a 1.1 liter stainless steel (410 ss) vessel equipped with a 5125 psi stainless steel rupture disc, a thermocouple temperature probe, and three high pressure inlet valves. Ammonia was introduced through one of the valves, another valve was used as a vent for the reactor and the third was used to supply an inert gas such as nitrogen to the reactor. Pressure inside the reactor was monitored with a 5000 psi pressure gauge. The reactor was mated to an electrically heated rocker. The apparatus was assembled and used in a bay designed exclusively for high pressure reactions.

The following procedure was used for a series of poly(aryl ether sulfone) depolymerization reactions. The Starting Polymers and proportions of ingredients are specified in Table 6. Starting Polymer A or Starting Polymer B was placed in the stainless steel reactor. The reactor was placed in the rocker after the cap, valve assemblies and rupture disc were put in place and pressure tested at 1000 psi for 30 minutes. The pressure was released. In a separate operation, a one liter Whitey cylinder was charged with ammonia from a gas cylinder. The ammonia was then transferred to the reactor as a gas by creating a pressure differential between the Whitey cylinder and the reactor. The pressure in the Whitey cylinder was increased with nitrogen under high pressure and the reactor was heated to a temperature of 210°C. At this temperature, the pressure in the reactor was increased to 3300 psi with nitrogen at high pressure and the rocker was turned on. The reactor was then heated to 250°C and agitation was continued at this temperature for three hours. Heating and agitation were then stopped and the reactor allowed to cool to 50°C. The pressure was released by venting the reactor to the atmosphere, the reactor was disassembled and the granular or powdery product removed. This product was washed with water until a neutral Ph was reached, collected in a Buchner funnel and dried in a vacuum oven at 85°C for 16 hours at 16 mm mercury. A powdery tan solid was recovered in yields of greater than 90%.

In Table 6 is shown the Size Exclusion Chromatography and chemical titration results of the ammonia depolymerization of Starting Polymers A and B. The products are substantially the same recurring units as the corresponding Starting Polymers, but of substantially lower molecular weight.

Table 6

AMMONIA DEPOLYMERIZATION OF POLY(ARYL ETHER SULFONES)

| STARTING POLYMER | STARTING POLYMER CHARGE(g) | AMMONIA CHARGE (grams) | TEMP DEG C | REACTOR PRESSURE (PSI) | TIME HOURS | TITRATION OH | RESULTS AMINE | Mn | Mw | R/T |
|---|---|---|---|---|---|---|---|---|---|---|
| A | 400 | 110 | 250 | 3600 | 3 | 0.25 | 0.20 | 5040 | 11400 | 1.13 |
| A | 400 | 110 | 250 | 3750 | 3 | 0.22 | 0.16 | 5350 | 15600 | 1.02 |
| A | 400 | 110 | 250 | 3700 | 3 | 0.21 | 0.16 | 5550 | 13900 | 1.03 |
| A | 400 | 110 | 250 | 3700 | 3 | 0.20 | 0.16 | 5660 | 13800 | 1.02 |
| A | 400 | 110 | 250 | 3750 | 3 | 0.23 | 0.18 | 5460 | 12700 | 1.12 |
| A | 400 | 110 | 250 | 3850 | 3 | 0.25 | 0.20 | 5020 | 11400 | 1.13 |
| A | 400 | 110 | 250 | 3750 | 3 | 0.25 | 0.20 | 4880 | 10100 | 1.10 |
| A | 400 | 150 | 250 | 3850 | 3 | 0.34 | 0.26 | 4120 | 8830 | 1.24 |
| A | 400 | 150 | 250 | 4000 | 3 | 0.29 | 0.22 | 4410 | 9860 | 1.16 |
| A | 400 | 150 | 250 | 4000 | 3 | 0.25 | 0.22 | 4550 | 10100 | 1.07 |
| A | 400 | 150 | 250 | 3750 | 3 | 0.25 | 0.22 | 4970 | 11300 | 1.17 |
| A | 400 | 150 | 250 | 3750 | 3 | 0.30 | 0.28 | 3760 | 8120 | 1.09 |
| A | 400 | 150 | 250 | 3800 | 3 | 0.36 | 0.35 | 3210 | 6710 | 1.14 |
| A | 400 | 150 | 250 | 3750 | 3 | 0.32 | 0.30 | 3570 | 7730 | 1.11 |
| B | 220 | 8 | 250 | 3700 | 2 | 0.59 | 0.55 | 2160 | 4060 | 1.23 |
| B | 220 | 19 | 250 | 3700 | 2 | 1.52 | 1.45* | 1260 | 1830 | 1.87 |
| B | 220 | 21 | 250 | 3700 | 4 | 1.81 | 1.97* | 1020 | 1340 | 1.93 |

* - NOT SOLUBLE IN DICHLOROMETHANE, AQUEOUS BASE NOT DETERMINED, TYPICALLY AQUEOUS BASE WAS 0.01 MEQ/GRAM.

## Example 20

In this Example is shown depolymerization with methylamine at high pressure to prepare poly(aryl ether sulfones) having aromatic secondary amine reactive groups of the type

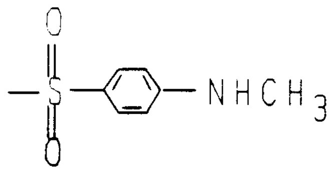

In Example 20, the same general procedure was followed as in Example 19. An appropriate charge of Starting Polymer A or Starting Polymer B and 40% aqueous methylamine was placed in a 1.1 liter stainless steel reactor. After being pressure tested as in Example 19, the reactor was heated to 210 ° C, whereupon the reactor pressure was increased to 3300 psi under high pressure nitrogen and the rocker was turned on. The reactor was then heated to 250 ° C and agitation was continued at this temperature for three hours. Heating and agitation were stopped and the reactor was allowed to cool to 50 ° C. The pressure was released by venting the reactor through a 10% sodium hydroxide scrubber to the atmosphere. The reactor was removed from the rocker, disassembled and the powdery product removed.

The product was washed with 0.1 N HCl and then with water until the washings were neutral pH, collected on a Buchner funnel and dried in a vacuum oven at 85 ° C for 16 hours at 16 mm mercury. This product was a powdery tan solid in 90% plus yields.

Table 7 shows the Size Exclusion Chromatography and chemical titration results for methylamine, depolymerized Starting Polymers A and B. The products had substantially the same recurring units as the corresponding Starting Polymer, but were of substantially lower molecular weight.

Table 7

EXAMPLE 20: **METHYLAMINE DEPOLYMERIZATION OF POLY(ARYL ETHER SULFONES)**

| STARTING POLYMER | STARTING POLYMER CHARGE(g) | METHYL-AMINE CHARGE(g) | TEMP DEG C | REACTOR PRESSURE (PSI) | TIME HOURS | TITRATION RESULTS OH | BASE | Mn | Mw | R/T |
|---|---|---|---|---|---|---|---|---|---|---|
| A | 400 | 62.4 | 250 | 3700 | 3 | 0.86 | 0.81 | 1500 | 2640 | 1.25 |
| A | 400 | 62.4 | 250 | 3700 | 3 | 0.88 | 0.83 | 1490 | 2550 | 1.27 |
| A | 400 | 62.4 | 250 | 3700 | 3 | 0.86 | 0.80 | 1500 | 2650 | 1.25 |
| A | 400 | 62.4 | 250 | 3700 | 3 | 0.97 | 0.87 | 1400 | 2320 | 1.29 |
| A | 400 | 62.4 | 250 | 3800 | 3 | 0.99 | 0.97 | 1340 | 2250 | 1.31 |
| A | 400 | 62.4 | 250 | 4200 | 3 | 1.01 | 0.96 | 1330 | 2130 | 1.31 |
| A | 400 | 62.4 | 250 | 3700 | 3 | 0.98 | 0.91 | 1470 | 2460 | 1.39 |
| A | 400 | 62.4 | 250 | 3700 | 3 | 1.01 | 0.95 | 1320 | 2090 | 1.29 |
| B | 400 | 10 | 250 | 3700 | 1 | 0.25 | 0.24 | 3030 | 6330 | 0.74 |
| B | 400 | 15 | 250 | 3700 | 2 | 0.83 | 0.63 | 1720 | 3170 | 1.26 |
| B | 400 | 15 | 250 | 3500 | 1 | 0.98 | 0.92 | 1360 | 2240 | 1.29 |

Examples 21-26 illustrate methods for preparing novel poly(aryl ether sulfones) having reactive thiol groups of the type

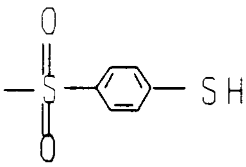

Example 21

A 250 ml glass reactor equipped with agitation, nitrogen purge, condenser, heating means and a trap containing 20% aqueous KOH, was charged with 10 grams of N,N-dimethylacetamide and 1.86 grams of sodium hydrogensulfide at room temperature and stirred until the sodium hydrogensulfide dissolved. Then 25 grams of Starting Polymer A were added, the mixture heated to 150 ° C and held at this temperature for three hours. The reaction mixture was cooled to 100 ° C and 4 ml of acetic acid was added. The reaction product was recovered by coagulation in 2 liters of methanol, filtering and thorough washing with deionized water. The powdery product was dried under partial vacuum at 110 ° C to constant weight. The dried product had substantially the same recurring unit as Starting Polymer A, but was of substantially lower molecular weight. Size Exclusion Chromatography and chemical titration results are shown in Table 8.

Example 22

The same materials, apparatus and procedure were used as in Example 21, except that Starting Polymer B was substituted for Starting Polymer A. The dried product had substantially the same recurring unit as Starting Polymer B, but was of substantially lower molecular weight. Size Exclusion Chromatography and chemical titration results are shown in Table 8.

Example 23

The same materials, procedure and apparatus were used as in Example 21, except that Starting Polymer C was substituted for Starting Polymer A. The dried product had substantially the same recurring unit as Starting Polymer C, but was of substantially lower molecular weight. Size Exclusion Chromatography and chemical titration results are shown in Table 8.

Example 24

A 500 ml glass reactor equipped with agitation, nitrogen purge, condenser, heating means and a trap containing 20% aqueous potassium hydroxide, was charged with 75 grams of N,N'-dimethylacetamide and 7.6 grams of sodiumsulfide nonahydrate at room temperature and stirred until the sodiumsulfide nonahydrate dissolved. Then 125 grams of Starting Polymer A was added, the mixture heated to 150 ° C and held at this temperature for three hours. The reaction mixture was cooled to 100 ° C and 4 ml of acetic acid was added. Then the reaction product was recovered by coagulating it in 2 liters of methanol, filtering and thoroughly washing with deionized water. The powdery product was dried under partial vacuum at 110 ° C to constant weight. The dried product was substantially comprised of the same recurring unit as Starting Polymer A, but was of substantially lower molecular weight. Size Exclusion Chromatography and chemical titration results are shown in Table 8.

Example 25

The same materials, procedure and apparatus were used as in Example 24 except Starting Polymer B was substituted for Starting Polymer A. The dried product was substantially comprised of the same recurring unit as Starting Polymer B, but was of substantially lower molecular weight. Size Exclusion Chroma-tography and chemical titration results are shown in Table 8.

Example 26

The same materials, procedure and apparatus were used as in Example 24 except Starting Polymer C was substituted for Starting Polymer A. The dried product was substantially comprised of the same

recurring unit as Starting Polymer C, but was of substantially lower molecular weight. Size Exclusion Chroma-tography and chemical titration results are shown in Table 8.

Table 8

| Examples 21-26: Depolymerization methods for preparing poly(aryl ether sulfones) having reactive thiol groups. | | | | | | |
|---|---|---|---|---|---|---|
| EXAMPLE | STARTING POLYMER | Mn | Mw | TITRATION | RESULTS(meq/g) | R/T |
| | | | | OH | SH | |
| 21 | A | 576 | 4320 | 1.18 | 0.11 | 0.37 |
| 22 | B | 1240 | 2140 | 0.99 | 1.21 | 1.36 |
| 23 | C | 1370 | 1860 | 0.62 | 0.40 | 0.70 |
| 24 | A | 2740 | 10500 | 0.37 | 0.20 | 0.78 |
| 25 | B | 4360 | 14600 | 0.28 | 0.12 | 0.87 |
| 26 | C | 2650 | 9690 | 0.25 | 0.27 | 0.69 |

Example 27

Example 27 illustrates a method for preparing novel poly(aryl ether sulfones) having reactive cyclic secondary amine groups of the type

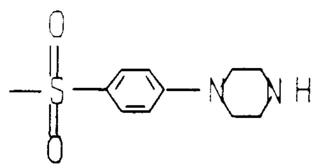

A 100 ml glass reactor equipped with agitation, nitrogen purge, condenser, and heating means was charged with 48.75 grams of dimethylsulfoxide and 9.65 grams of Starting Polymer F at room temperature. The temperature was increased to 110±10 ° C and 1.01 grams of piperazine added. The temperature was maintained for 18.5 hours and then the mixture was cooled to 23 ° C. The reaction product was recovered by coagulating in water, using a water to reactor contents volume ratio of seven to one, filtering, thoroughly washing the powdery coagulum with water, and then drying to constant weight at 112 ° C under partial vacuum. Yield = 8.98 grams. The dried product had substantially the same recurring unit as Starting Polymer F, but was of substantially lower molecular weight. Size Exclusion Chromatography results were Mn = 13,900 and Mw = 32,200. Titration results were OH = 0.20 meq/g and amine = 0.11 meq/g. R/T was 2.15.

Example 28

Example 28 illustrates depolymerization of a mixture of two different poly(aryl ether sulfones). To a 500 ml glass reactor equipped with agitation, nitrogen purge, condenser and heating means was added diphenylsulfone (25 g), Starting Polymer B (12.5 g), and Starting Polymer C (12.5 g). This mixture was heated to 200 ° C with stirring. An aqueous solution of KOH (45%, 2.0 g) was added to the mixture and the mixture held at 200 ° C for two hours. The reaction product was recovered by coagulating in methanol, redissolving in methylene chloride, coagulating in hexane and dried at 120 ° C under partial vacuum for 16 hours. Size Exclusion Chromatography results were Mn = 1970 and Mw = 3460. Only one glass transition temperature was found by Differential Scanning Calorimetry Tg = 136 ° C. The product comprised a mixture of the Starting Polymer recurring units B and C.

Examples 29 and 30 illustrate depolymerization of poly(aryl ether sulfones) with hydrides.

Example 29

The same apparatus as used in Example 19 was used in this example. To the reactor were added 150 grams of Starting Polymer C, 450 grams of N,N'-dimethylacetamide, and 15 grams of a 5% Rh/$Al_2O_3$ catalyst (Engelhard Industries). The reactor was pressurized to 2500 psi and held at this pressure for 30 minutes as a pressure test. The nitrogen was then vented from the reactor and the reactor repressurized to 2500 psi with hydrogen. The reactor was heated to 115°C and over several hours the reactor pressure decreased 1850 psi and then stabilized at 650 psi indicating the end of the reaction. The reactor was cooled to room temperature, the hydrogen vented and the reactor contents filtered with Buchner funnel. The reaction product was recovered by coagulating the filtrate in methanol and drying the filtered coagulum at 120°C under partial vacuum to constant weight. Size Exclusion Chromatography results were Mn=2740 and Mw=6600.

Example 30

To a 250 ml glass reactor equipped with agitation, nitrogen purge, condenser and heating means were added 100 ml of methylene chloride and 5 grams of Starting Polymer A. Slowly to this mixture was added 54 ml of diisobutylaluminum hydride (1.0 M solution in methylene chloride) under nitrogen. The mixture was warmed to reflux and held at reflux for two hours, cooled to room temperature and the reaction product recovered by coagulating in methanol, filtering and drying the filtered coagulum at 100°C under partial vacuum for 16 hours. Size Exclusion Chromatography results were Mn=3990 and Mw=5870.

Example 31

Example 31 illustrates depolymerization of a poly(aryl ether ketone). The starting polymer was polyetheretherketone (PEEK) injection molding pellets purchased from ICI Ltd. The recurring units were

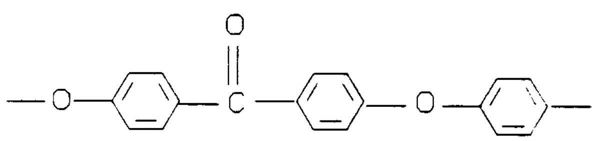

To a 250 ml glass reactor equipped with agitation, nitrogen purge, condenser and heating means was added 75 grams of diphenylsulfone and 25 grams of PEEK. The mixture was warmed to 200°C, 2.0 grams of potassium hydroxide powder were added and the mixture was maintained at 200°C for six hours. The mixture was cooled and the reaction product recovered by coagulating in methanol, filtering, thoroughly washing with methanol and drying at 70°C under partial vacuum to constant weight. The black colored product had a crystalline melting point of 275°C. Size Exclusion Chromatography results were Mn=740 and Mw=2600.

Example 32

In this Example, various reactive poly(aryl ether sulfones) of this invention were used to make an epoxy resin composition having the following ingredients and parts by weight.

| Ingredient | Parts by weight |
|---|---|
| poly(aryl ether sulfone) from examples 1,2,3,7,8,9,10,11,13 or 19 | 24.88 |
| triglycidyl p-aminophenol | 23.92 |
| diglycidyl ether of Bisphenol F | 23.92 |
| 3,3'-diaminodiphenylsulfone | 23.45 |
| Proteus 5025 (spray dried particles of carboxylated styrene-butadiene-acrylonitrile terpolymer with Tg of 28 C. and ave. particle size of 20 microns as received from B.F.Goodrich Company.) | 3.83 |
| | 100.00 |

The resin composition was made into prepreg using IM-7 carbon fibers of Hercules Incorporated in accordance with the procedures described in U.S. 4,656,207; U.S. 4,656,208 and U.S. 4,783,506 which are hereby incorporated by reference. The prepreg was laid up and cured into composite samples in accordance with the procedure of the referenced patents. The samples were used to conduct compression after impact tests with results shown in Table 9.

Table 9

| Example 32: Compression After Impact Results for Carbon Fiber/Epoxy Composites containing poly(aryl ether sulfones) of this invention. | |
|---|---|
| Poly(aryl ether sulfone) | Compression After Impact(ksi) |
| Example 1 | 46 |
| Example 2 | 49 |
| Example 3 | 46 |
| Example 7 | 47 |
| Example 8 | 50 |
| Example 9 | 49 |
| Example 10 | 45 |
| Example 11 | 47 |
| Example 13 | 38 |
| Example 19 | 39 |

Example 33

Example 33 provides a procedure to recycle polyarylene polyethers from a composite laminate. The starting material was a composite laminate of nominally 36 wt% UDEL P-1700 and 64 wt% carbon fiber. The composite weighed 15.96 g of which 5.75 g was UDEL P-1700 and 10.21 g was carbon fiber. The composite was placed in a 3-neck flask with 63.84 g DMSO. The flask was placed in an oil bath with agitation at 128° C. After about 4 hours the polymer appeared to have completely dissolved and the loose carbon fiber rolled into a ball around the agitator. A 15 ml sample of the solution was precipitated in cold tap water to produce a long noodle-like precipitate. Size exclusion chromatography showed the Mn to be 27,084 and the Mw to be 78,444. To the remaining solution of UDEL polymer and DMSO was added 0.35 g KOH to lead to the degradation and reduction in molecular weight of the polymer. The mixture was maintained at a temperature of about 130° C with agitation for about 4 1/2 hours. The material remaining in the flask was washed with DMSO and removed from the flask. The material was poured into water to coagulate and centrifuged and decanted and washed with water twice. The material was dried in a vacuum oven overnight under full vacuum with 110° C heat. SEC showed the material that had been degraded with KOH to have a Mn of 5,378 and a Mw of 10,106.

**Claims**

**1.** A process of preparing a reactive reduced molecular weight polyarylene polyether from a starting polyarylene polyether for use in resin compositions, prepregs and composites, wherein said reactive reduced molecular weight polyarylene polyether has a lower molecular weight than said starting polyarylene polyether; comprising the steps of first contacting said starting polyarylene polyether with a nucleophilic reagent for a period of time sufficient to reduce the molecular weight of said starting polyarylene polyether, and then recovering said reactive reduced molecular weight polyarylene polyether.

**2.** The process of claim 1 wherein said starting polyarylene polyether is selected from the group consisting of poly(aryl ether sulfones), poly(aryl ether ketones), poly(aryl ether nitriles), poly(ether imides), poly(phenylene ethers), and poly(phenylene sulfides)

**3.** The process of claim 2 wherein said said reduced molecular weight polyarylene polyether is represented by the formula

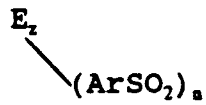

wherein Ar is a bivalent aromatic residue of a poly(aryl ether sulfone), Ar may vary within said reactive polyarylene polyether, at least a portion of Ar comprises an aromatic ether or an aromatic thioether group that is ortho or para in position to at least one $SO_2$ group; E represents reactive groups that are residues of said nucleophilic reagent or of a portion of said starting polyarylene polyether, z is the number average reactive sites per chain on said reactive groups E, $0.1 \leqq z \leqq 10$, m and n are the number average repeating units per chain, m is between 1 and 150 and n is less than m.

**4.** The process of any of the preceding claims wherein said nucleophilic reagent is selected from the group consisting of alkali metal hydroxides, alkali metal sulfides, alkali metal hydrogensulfides, hydrates of said alkali metal sulfides and of said alkali metal hydrogensulfides, hydrazine, thiol or amino substituted triazoles, ammonia, alkylamines, aromatic amines, bisalkyl mercaptans, bisphenates, bisphenols, bisthiophenols, bisalkoxides, ammonium sulfide, aminophenols and aminothiophenols.

**5.** The process of claim 4 wherein said nucleophilic reagent is selected from the group consisting of potassium hydroxide; sodium sulfide; ammonia; sodium hydrogensulfide; methylamine; dimethylamine; piperazine; 1,6-hexanediamine; diethylenetriamine; 4-amino-5-hydrazino-4H-1,2,4-triazole-3-thiol; hydrazine; aniline; 4,4'-methylene dianiline; 4,4'-oxydianiline; 3-aminophenol; 4-aminophenol; 4-aminothiophenol; 2-aminoethanol; 2,2-bis(4-hydroxyphenyl)-propane disodium salt; 1,4-cyclohexanediol disodium salt; and ammonium sulfide.

**6.** The process of claim 1 wherein said nucleophilic reagent is a reaction product of a first nucleophilic reagent and a solvent or a nonsolvent of said starting polyarylene polyether.

**7.** The process of claim 6 wherein said first nucleophilic reagent is potassium hydroxide, said solvent is N,N'-dimethylacetamide and said nucleophilic reagent is dimethylamine.

**8.** The process of claim 3 wherein E represents reactive groups having at least one reactive site selected from the group consisting of primary amines, secondary amines, tertiary amines, hydroxyl, and thiol groups.

**9.** The process of claim 2 wherein said poly(aryl ether sulfone) is a polymer selected from the group consisting of linear and branched homopolymers, copolymers, terpolymers, tetrapolymers, graft copolymers, block copolymers, triblock copolymers, triblock terpolymers and mixtures thereof.

**10.** The process of claims 2 or 9 wherein said poly(aryl ether sulfone) comprises one or more repeating units selected from the group consisting of

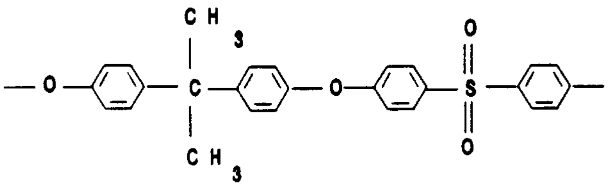

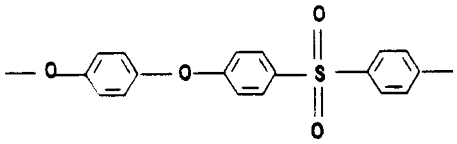

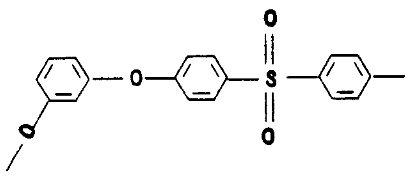

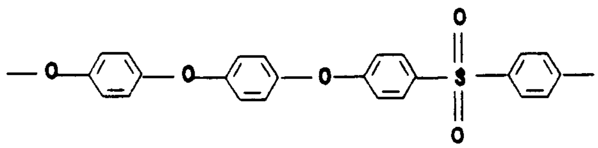

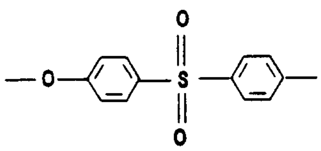

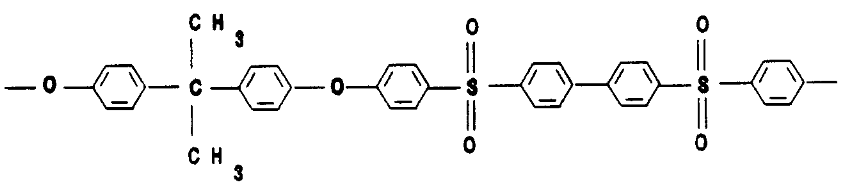

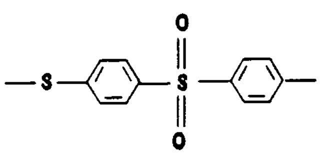

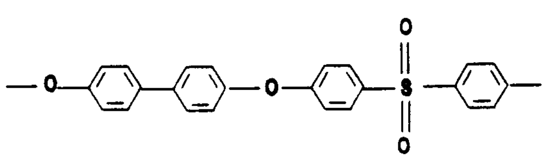

**11.** The process of claim 10 wherein said poly(aryl ether sulfone) is selected from the group consisting of polymers comprising recurring units,

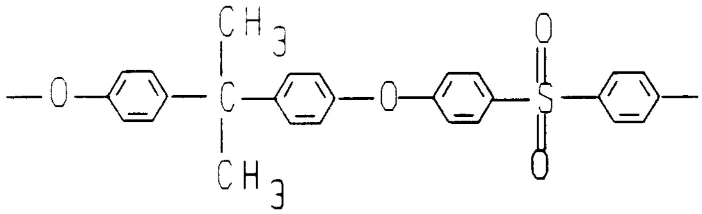

a copolymer comprising recurring units,

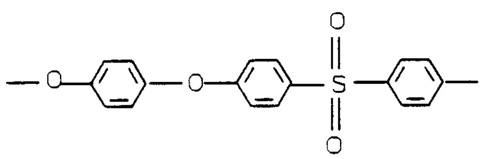

and

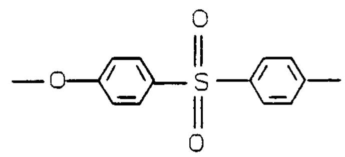

a polymer comprising recurring units,

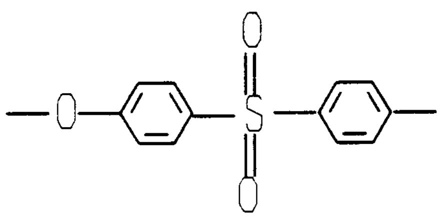

a terpolymer comprising recurring units the majority of which are

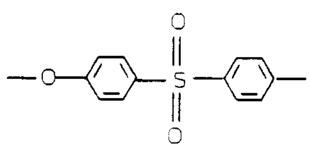

and

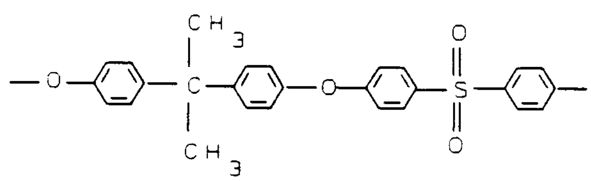

and a minority of which are a third type of recurring unit, and a polymer comprising recurring units,

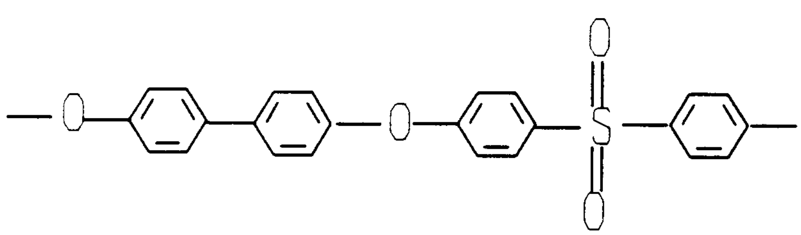

and mixtures thereof.

**12.** The process of claim 2 further comprising reacting a reagent with said reactive polyarylene polyether to produce a product having reactive groups connected directly to said reduced molecular weight polyarylene polyether, or connected through a series of covalent bonds to a phenyl ring that is a residuum of an $ArSO_2$ recurring unit wherein said phenyl ring is connected directly to said polyarylene polyether.

**13.** The process of claim 12 wherein said reagent is selected from the group consisting of epichlorohydrin, allyl bromide, chloromethyl styrene, chloro-diamino-s-triazine, propargyl bromide, glycidyl methacrylate, cyanogen halides, cyanuric chloride followed by reaction with 1,6-hexanediamine, acetic anhydride, 5-norbornene-2,3-dicarboxylic acid anhydride, methyl-5-norbornene-2,3-dicarboxylic acid anhydride, and 4,4'-methylene diphenylisocyanate.

**14.** The process of claim 12 wherein said reactive groups are selected from the group consisting of epoxide, primary amine, secondary amine, tertiary amine, anhydride, carboxylic acid, maleimide, cyanate ester, ethynyl, vinyl, isocyanate, allyl, methallyl, methylnadimido, nadimido, thiol, thiocyanate ester and hydroxyl groups.

**15.** The reduced molecular weight polyarylene polyether produced by the process of any of the preceding claims.

**16.** A resin formulation comprising a mixture of the polyarylene polyether of claim 15 and a resin selected from the group consisting of epoxy, bismaleimide, cyanate ester, phenol-formaldehyde, urethane, polyester, vinyl ester, siloxane, cyclopentadiene and higher oligomers, acetylenic, and cyclic polycarbonate resins, or mixtures thereof.

**17.** A prepreg comprising high strength fibers impregnated with the resin formulation of claim 16.

**18.** The reactive polyarylene polyether produced by the process of any of claims 1-14 represented by the formula

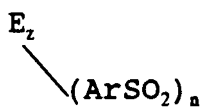

wherein Ar is a bivalent aromatic residue of a polyarylene polyether, Ar may vary within said reactive polyarylene polyether, at least a portion of Ar comprises an aromatic ether or an aromatic thioether group that is ortho or para in position to at least one $SO_2$ group; n is the number average recurring units, E represents reactive groups, having at least one reactive site, that is located at chain termini, along a chain, or both; z is the number average reactive sites per chain and $0.1 \leqq z \leqq 10$ and E is selected from the group consisting of -OH and at least one of the following:

$-OH$

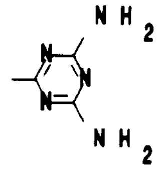

$-N(CH_3)_2$

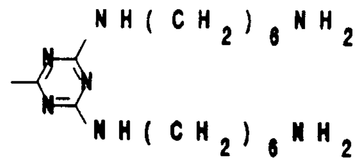

$-N(R_1)R_2$

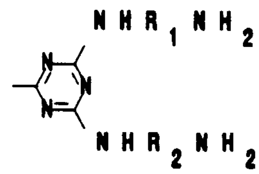

$-NH(CH_2)_6NH_2$

$-NHR_1NH_2$

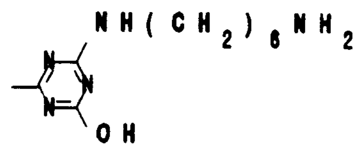

$-NH(CH_2)_2NH(CH_2)_2NH_2$

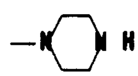

$-NHR_1NHR_2NH_2$

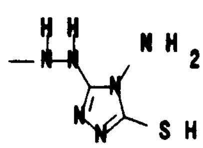

$-SH$

wherein $R_1$ and $R_2$ are selected from the group consisting of bivalent aromatic groups and linear or branched alkyl groups having 1 to 20 carbon atoms and $R_1$ and $R_2$ are the same or different.

**19.** The reactive polyarylene polyether of claim 18 wherein said aromatic ether is selected from the group consisting of

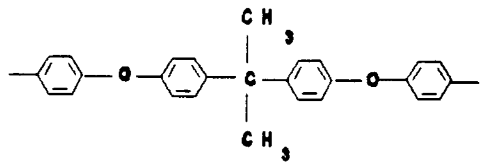

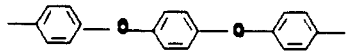

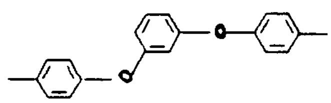

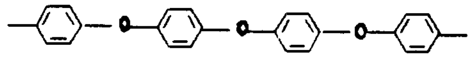

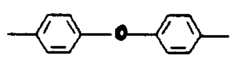

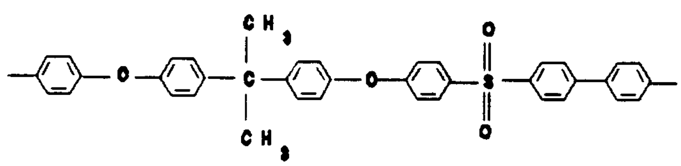

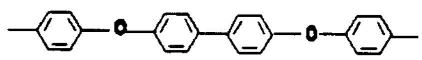

and said aromatic thioether group is

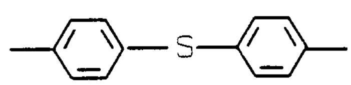

**20.** A reactive polyarylene polyether represented by the formula

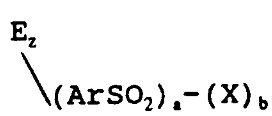

wherein Ar is a bivalent aromatic residue of a polyarylene polyether that may vary within said reactive polyarylene polyether, at least a portion of Ar comprises an aromatic ether or an aromatic thioether group that is ortho or para in position to at least one $SO_2$ group, X is a residue of a polyfunctional nucleophilic reagent, E represents reactive groups having at least one reactive site, z is the number average reactive sites per chain, $0.1 \leqq z \leqq 10$, a is the number average recurring units $ArSO_2$, b is the number average recurring units X, the sum of a + b is less than m, and the ratio of b units to a + b

units is greater than or equal to 0.001 and less than or equal to 0.10, and E is one or more reactive groups selected from the group consisting of

$-OH$

$-N(CH_3)_2$

$-N(R_1)R_2$

$-NH(CH_2)_6NH_2$

$-NHR_1NH_2$

$-NH(CH_2)_2NH(CH_2)_2NH_2$

$-NHR_1NHR_2NH_2$

$-SH$

$-CH_2CH=CH_2$

$-CH=CH_2$

$-CH_2C\equiv CH$

$-COOH$

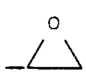

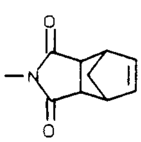

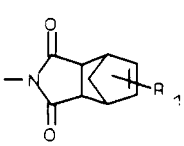

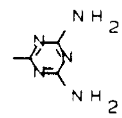

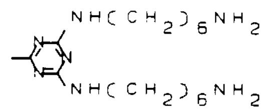

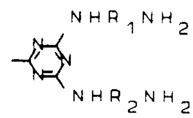

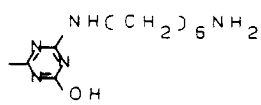

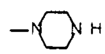

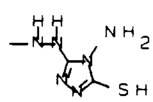

$-SCN$

$-OCN$

$-NCO$

$-NHR_1$

$-NH_2$

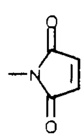

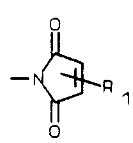

wherein $R_1$ and $R_2$ are selected from the group consisting of bivalent aromatic groups and linear or branched alkyl groups having 1 to 20 carbon atoms and $R_1$ and $R_2$ are the same or different.

**21.** The reactive polyarylene polyether of claim 20 wherein X is the residue of a nucleophilic reagent selected from the group consisting of alkali metal sulfides, alkali metal hydrogensulfides, hydrates of said alkali metal sulfides and of said alkali metal hydrogensulfides, thiol or amino substituted triazoles, aminoalkanes, bisaminoalkanes, trisaminoalkanes, tetraaminoalkanes, pentaaminoalkanes, bismercaptoalkanes, bisphenates, bisphenols, bisthiophenols, bisalkoxides, ammonium sulfide, aminophenols and aminothiophenols.

**22.** The reactive polyarylene polyether of claim 20 wherein X is the residue of a nucleophilic reagent selected from the group consisting of sodium sulfide, sodium hydrogensulfide, piperazine, 1,6-hexanediamine, diethylenetriamine, 4-amino-5-hydrazino-4H-1,2,4-triazole-3-thiol, 4,4'-methylene dianiline, 4,4'-oxydianiline, 3-aminophenol, 4-aminophenol, 4-aminothiophenol, 2-aminoethanol, 2,2-bis(4-hydroxyphenyl)-propane disodium salt, 1,4-cyclohexanediol disodium salt and ammonium sulfide.

**23.** A resin composition comprising a mixture of the reactive polyarylene polyether of claim 20, 21 or 22 and a resin selected from the group consisting of epoxy, bismaleimide, cyanate ester, phenol-formaldehyde, urethane, polyester, vinyl ester, siloxane, acetylenic, and cyclic polycarbonate resins and mixtures thereof.

**24.** A prepreg comprising the resin composition of claim 23, a curing agent and a high strength fibers.

**25.** The prepreg of claim 24 further comprising infusible particles, wherein said particles are between 10 and 75 microns in diameter and are made from a material selected from the group consisting of rubber, thermoplastic resins, thermoset resins, a semi-IPN of a thermoplastic and a thermoset resin, glass, ceramic and metal.

**26.** A composite comprising multiple layers of the prepreg of claims 24 or 25 wherein said prepreg is cured.

**27.** A process for recycling polyarylene polyethers comprising the steps of:

(a) immersing a material containing said polyarylene polyethers in a solvent of said polyarylene polyethers for a sufficient period of time for said polyarylene polyethers to go into solution,

(b) separating said polyarylene polyethers from said solution,

(c) contacting said separated polyarylene polyethers with a nucleophilic reagent for a period of time sufficient to reduce the molecular weight of said starting polyarylene polyether and then recovering said reduced molecular weight polyarylene polyether.